(19) **Europäisches Patentamt**
**European Patent Office**
**Office européen des brevets**

(11) Veröffentlichungsnummer : **0 294 467 B1**

(12) # EUROPÄISCHE PATENTSCHRIFT

(45) Veröffentlichungstag der Patentschrift :
23.10.91 Patentblatt 91/43

(51) Int. Cl.$^5$ : **G01B 3/20, G01B 3/00**

(21) Anmeldenummer : 88900890.0

(22) Anmeldetag : 23.12.87

(86) Internationale Anmeldenummer :
PCT/EP87/00817

(87) Internationale Veröffentlichungsnummer :
WO 88/05151 14.07.88 Gazette 88/15

(54) **MESSKLUPPE.**

(30) Priorität : 24.12.86 DE 3644444

(43) Veröffentlichungstag der Anmeldung :
14.12.88 Patentblatt 88/50

(45) Bekanntmachung des Hinweises auf die
Patenterteilung :
23.10.91 Patentblatt 91/43

(84) Benannte Vertragsstaaten :
AT CH DE FR LI LU NL SE

(56) Entgegenhaltungen :
AU-A- 410 975
DE-U- 8 605 400
DE-U- 8 612 428
GB-A- 2 156 989
GB-A- 2 157 831
US-A- 4 226 024
Patent Abstracts of Japan, vol. 11, No: 52
(P-548)(2499), 18 February 1987, & JP, A,
61219820

(73) Patentinhaber : PAV Präzisions-Apparatebau
Aktiengesellschaft
Schaaner Strasse 40
FL-9490 Vaduz (LI)

(72) Erfinder : LAZECKI, René
Heldaustrasse 160
CH-9470 Buchs (CH)
Erfinder : KESSLER, Jürg
Bülsweg
CH-9472 Grabs (CH)
Erfinder : WÖSSNER, Albrecht
Wingerta 677
FL-9496 Balzers (LI)
Erfinder : THÖNY, Christian, E.
Im Tröxle 27
FL-9494 Schaan (LI)

(74) Vertreter : Witte, Alexander, Dr.-Ing. et al
Witte, Weller & Hilgenfeldt Patent- und
Rechtsanwälte Augustenstrasse 7
W-7000 Stuttgart 1 (DE)

**Beschreibung**

Die Erfindung betrifft eine Meßkluppe mit einem Stab und einem auf dem Stab mittels formschlüssiger Führung längsverschiebbaren Läufer, wobei der Stab und der Läufer mit je einem rechtwinklig abstehenden Meßschnabel in zueinander paralleler Anordnung versehen sind, wobei zwischen dem Stab und dem Läufer mindestens eine Längsmarkierung in Wechselwirkung mit mindestens einem Längensensor steht und der mindestens eine Längensensor an am Läufer angeordnete elektronische Schaltmittel zur Auswertung von Signalen des Sensors angeschlossen ist, und die Schaltmittel als Kleinrechner mit Tastatur und Anzeigeelementen ausgebildet sind.

Eine derartige Meßkluppe ist aus dem Dokument DE-U-86 12 428 bekannt.

Die Erfindung betrifft ferner Verwendungen der eingangs genannten Meßkluppe zum Vermessen von Schlachtvieh, von Baumstämmen und von Käselaiben.

Meßkluppen sind schieblehrenähnliche Meßgeräte zum Messen der Außenabmessungen verhältnismäßig großer Objekte, beispielsweise zum Vermessen von Schlachtvieh, zum Messen des Durchmessers von Baumstämmen oder von Käselaiben und dgl. mehr.

Meßkluppen werden daher beispielsweise in Schlachthöfen eingesetzt, um z.B. Schweinehälften hinsichtlich des Verhältnisses von Fett und Muskelgewebe an charakteristischen Punkten auszumessen und daraus Klassifizierungsmerkmale, beispielsweise Muskelfleischprozente, Handelsklassen oder Preise zu bestimmen.

Im forstwirtschaftlichen Betrieb werden Meßkluppen eingesetzt, um anhand von Reihenmessungen im Wald das Volumen des schlagbaren Holzes eines bestimmten Waldabschnitts zu bestimmen. Hierbei macht man sich die Tatsache zunutze, daß bei Kenntnis der Baumart und des Standorts die Messung des Baumstammdurchmessers in einer bestimmten Höhe sehr exakte Rückschlüsse auf die Höhe des Baums zuläßt, so daß eine separate Höhenmessung im Rahmen einer hinnehmbaren Toleranz nicht erforderlich ist. Man kann also mit anderen Worten mittels einer einzigen Messung an einem genormten Meßort eines Baums dessen nutzbares Holzvolumen mit hinreichender Genauigkeit bestimmen. Auch kann man mit einer Meßkluppe im forstwirtschaftlichen Bereich auf relativ einfache Weise das Volumen von bereits geschlagenem Holz bestimmen, wenn dieses Holz z.B. auf eine Normlänge abgelängt worden ist. Durch entsprechende Verknüpfung der Meßwerte mit vorgegebenen Preisen kann man daher auch in diesem Falle z.B. den Preis einer geschlagenen Holzmenge bestimmen.

Schließlich sind Meßkluppen einfacher Bauart auch schon verwendzt worden, um Käselaibe zu vermessen und zwar insbesondere um deren Volumen zu bestimmen.

Aus dem eingangs genannten Dokument DE-U-86 12 428 ist eine Vorrichtung zum Klassifizieren von Schlachtkörpern, insbesondere von Schweinehälften bekannt. Die bekannte Vorrichtung umfaßt einen in einem Rohr verschiebbaren Stab, dessen aus dem Rohr herausragendes Ende ebenso wie das benachbarte Ende des Rohres mit einem rechtwinkelig abstehenden Meßschnabel versehen ist, so daß eine Meßkluppe gebildet wird. Auf dem Rohr ist ferner ein Kleinrechner mit Tastatur und Anzeigeelementen angeordnet. Bei der bekannten Vorrichtung ist der Stab im Rohr nur in Längsrichtung geführt, er läßt sich indes um seine Längsachse drehen, so daß die beiden Meßschnäbel in eine zueinander windschiefe Anordnung gebracht werden können.

Bei der bekannten Vorrichtung ist der Kleinrechner in einem Rechnergehäuse untergebracht und so aufgebaut, daß er den rauhen Umgebungsbedingungen standhält, wie sie in einem Schlachthof vorherrschen. Hierzu sind insbesondere Schutzmaßnahmen gegen Feuchtigkeit, hohe und tiefe Temperaturen sowie harte Stöße vorgesehen.

Bei einer aus dem Dokument US-A-4 226 024 bekannten, weiteren Meßkluppe ist auf dem Läufer eine elektronische Auswerteinheit angeordnet, mit der das Meßergebnis, d.h. der Längenabstand der an einem Meßobjekt anliegenden Meßschnäbel, elektronisch ausgemessen werden kann. Hierzu sind auf der Breitseite des Stabes Längsmarkierungen eingebracht und zwar diskontinuierlich in Nuten verteilte magnetische Einsätze. Gegenüber diesen Einsätzen ist auf dem Läufer ein magnetfeldempfindliches Element, nämlich eine Feldplatte, vorgesehen. In Längsrichtung gesehen sind zwei Feldplatten im Längsabstand eines Vielfachen der Teilung des Längsrasters zuzüglich oder abzüglich eines Viertels der Teilung hintereinander angeordnet, um die Verschiebungsrichtung des Läufers aus der Phasenbeziehung der beiden von den Feldplatten erzeugten Meßsignale bestimmen zu können.

Bei dieser bekannten Meßkluppe sind auf dem Läufer selbst nur eine Anzeigeinheit und ein Speicher für den jeweils erfaßten Meßwert vorgesehen. Zur Weiterverarbeitung dieser Daten, insbesondere zur Verknüpfung dieser Daten mit vorgegebenen Parametern, im Anwendungsfall der Forstwirtschaft also beispielsweise der Holzart, des Standorts, des bezogenen Volumenpreises und dgl., ist ein gesondertes tragbares Datenterminal vorgesehen, das seinerseits in Wechselbeziehung zu einem größeren Rechner treten kann.

Diese Konfiguration ist jedoch insofern nachteilig, als Meßkluppen häufig unter sehr rauhen Umweltbedingungen benutzt werden, beispielsweise in einem Wald unter allen Witterungsbedingungen, beim Holzfällen oder auch in anderen Anwendungsbereichen, von denen eingangs bereits die Rede war.

Bei diesen Anwendungsfällen ist es jedoch außerordentlich nachteilig, mit mehreren getrennten Einheiten hantieren zu müssen. Auch sind die hierzu erforderlichen Verbindungen mit Kabeln und Steckern aus vielerlei Gründen nachteilig, weil eine zuverlässige Meßwerterfassung, -speicherung und -verarbeitung kaum möglich ist.

Aus dem Dokument DE-U-86 05 400 ist ein elektronischer Meßschieber bekannt, der als Schieblehre ausgebildet sein kann. Dieser bekannte Meßschieber umfaßt daher eine Führungsschiene und einen auf dieser verschiebbar geführten Schieberkörper. Der Schieberkörper seinerseits enthält einen als komplette Elektronikeinheit ausgebildeten, einen Meßkopf, eine Spannungsquelle und eine Meßanzeige enthaltenden Baustein. Der Baustein ist in einer Paßaufnahme des Schieberkörpers festgehalten und damit aus diesem auch entnehmbar.

Eine weitere Meßkluppe der eingangs genannten Art ist aus dem Dokument DE-A-33 30 396 bekannt.

Bei dieser weiteren bekannten Meßkluppe, die zur Bestimmung des Durchmessers von Rundhölzern oder dgl. verwendet werden soll, ist der Meßstab hohl ausgebildet und im hohlen Meßstab ist ein Linearpotentiometer vorzugsweise in einer InertgasAtmosphäre angeordnet. Am freien Ende des Stabes sind Einbauräume für eine elektronische Meßanordnung bzw. für Batterien vorgesehen, über die Einzelheiten nicht angegeben sind. Eine Verbindung zu einem externen Rechner ist bei dieser bekannten Meßkluppe nicht vorgesehen.

Aus dem Dokument DE-A-30 26 906 ist eine weitere Meßkluppe für forstwirtschaftliche Anwendungen bekannt, bei der auf dem Läufer ein übliches Rollmaß angeordnet ist, d.h. ein aufgewickeltes Metallbandmaß, dessen freies Ende mit dem feststehenden Meßschnabel verbunden ist, so daß beim Verschieben des Läufers auf dem Stab das Rollmeßband aus- bzw. eingefahren wird. Diese bekannte Meßkluppe ist zur Erleichterung des Transports demontierbar und zwar kann der Stab vom festen Meßschnabel gelöst werden und auch der bewegliche Meßschnabel ist zusammen mit dem Läufer als Kompletteinheit demontierbar. Das Rollmeßband ist jedoch fest auf dem Läufer angeordnet. Eine elektronische Auswertung von Meßwerten ist bei dieser bekannten Meßkluppe weder vorgesehen noch möglich.

Aus dem Dokument DE-A-28 32 986 ist eine Schieblehre bekannt, bei der eine elektronische Abtasteinheit auf dem Läufer mit einem induktiv abtastbaren Strichmuster auf dem Stab zusammenwirkt. Auf dem Läufer befindet sich eine Auswerteinheit mit Anzeigeeinheit sowie zugehörigen Versorgungsbatterien. Bei dieser bekannten Schieblehre ist ferner der bewegliche Schenkel geringfügig um eine senkrecht zur Meßebene angeordnete Achse verschwenkbar und arbeitet während der Schwenkbewegung mit einem Druckmeßsystem zusammen. Auf diese Weise sollen die sogenannten Abbe schen Meßfehler vermieden werden, die dadurch auftreten, daß infolge mechanischer Toleranzen der Läufer auf dem Stab leicht verkantet wird, wenn der bewegliche Meßschnabel unter hohem Druck an das Meßobjekt angelegt wird. Durch die geringfügige und selbst bei präziser Fertigung nie völlig vermeidbare Verkantung des beweglichen Meßschnabels wird ein Meßfehler erzeugt, weil das Meßobjekt sich nicht in der Verlängerung des Längenmaßstabes befindet, so daß bei Verkanten des beweglichen Meßschnabels sich ein Fehler einstellt, der dem Verkantungswinkel und dem Abstand des Meßobjektes von der Meßskala entspricht. Bei der bekannten Schieblehre wird daher ein Meßwert dann abgelesen, wenn mittels des Drucksensors erkannt wird, daß der bewegliche Meßschnabel sich auszulenken, d.h. zu verkanten beginnt.

Schließlich ist aus dem Dokument DE-A-31 28 656 noch ein inkrementales Lage-Meßsystem bekannt, bei dem ebenfalls zwei Längensensoren hintereinander angeordnet sind und zwar in einem Abstand, der einem Vielfachen der Teilung des Längsrasters der zugehörigen Längsmarkierungen zuzüglich oder abzüglich eines Viertels der Teilung entspricht.

Die bekannten Meßkluppen, soweit sie mit elektronischen Meßsystemen ausgerüstet sind, haben den Nachteil, daß eine Nullung schwierig ist, weil die vom Zähler der elektronischen Schaltmittel gezählten Längsmarken über die Länge des Stabes gleichförmig ausgebildet sind und daher eine absolute Positionsbestimmung schwierig ist.

Bei herkömmlichen Meßkluppen mit elektronischen Meßsystemen ist es daher erforderlich, vor Beginn eines Meßvorganges die Meßkluppe zu nullen, d.h. bei zusammengeschobenen Meßschnäbeln eine Taste zu betätigen, die den Zähler im Kleinrechner zurücksetzt.

Bei der Meßkluppe gemäß dem Dokument US-A-4 226 024 ist an dem mit dem Meßschnabel versehenen Ende des Stabes eine Ausnehmung vorgesehen, in die bei zusammengeschobener Meßkluppe ein unter Federkraft gehaltener Bolzen des Schiebers einfällt. Durch diese Einfallbewegung wird ein elektrischer Schalter betätigt und der Zähler selbsttätig auf Null zurückgesetzt.

Diese Anordnung hat jedoch den Nachteil, daß sie eine elektromechanische Betätigung des Zählers darstellt und damit bei rauhen Einsatzbedingungen zu Problemen führen kann, insbesondere wenn die Ausnehmung im Stab durch Schmutz verschmiert wird. Außerdem ist bei der bekannten Vorrichtung erforderlich, eine in dem genannten Dokument nicht näher beschriebene mechanische Rückholvorrichtung für den Bolzen vorzusehen, wenn dieser bei genullter Meßkluppe in die Ausnehmung eingefallen ist und die Kluppe anschließend wieder geöffnet werden soll.

Der Erfindung liegt demgegenüber die Aufgabe zugrunde, eine Meßkluppe der eingangs genannten Art dahingehend weiterzubilden, daß sie mit hoher Präzision für eine Vielzahl unterschiedlichster Meßaufgaben auch bei unwirtlichen Randbedingungen zuverlässig einsetzbar ist.

Diese Aufgabe wird erfindungsgemäß dadurch gelöst, daß zwischen Läufer und Stab ein Positionssensor mit einer Positionsmarke zusammenwirkt, derart, daß der Positionssensor bei aneinander anliegenden Meßschnäbeln ein Nullungssignal für den Kleinrechner erzeugt, wobei die Positionsmarke dadurch gebildet wird, daß die Längenmarkierung ferner mit dem Positionssensor zusammenwirkt und in ihrer Längsausdehnung derart begrenzt ist, daß bei Anlegen der Meßschnäbel aneinander der Positionssensor außer Wechselwirkung mit der Längenmarkierung tritt.

Die Erfindung hat damit den Vorteil, daß zwischen einzelnen Messungen die Kluppe nach Belieben genullt werden kann, weil bei Ansprechen des Positionssensors und geschlossenen Meßschnäbeln die Elektronik zur Erfassung und Anzeige der Länge, d.h. des Abstandes der Meßschnäbel voneinander, auf einen Nullwert geeicht wird. Dies geschieht ohne mechanische Hilfsmittel lediglich dadurch, daß die ohnehin vorhandenen Elemente, nämlich der Positionssensor und die Längenmarkierung, in geeigneter Weise ausgebildet sind.

Bei einer bevorzugten Ausführungsform der Erfindung sind in an sich aus dem Dokument DE-U-86 05 400 bekannterweise die Schaltmittel mittels lösbarer Verbindungsmittel am Läufer befestigt und damit als kompakte Einheit gesamthaft vom Läufer abnehmbar bzw. an diesem befestigbar.

Dies eröffnet zum einen die Möglichkeit, eine Vielzahl von Messungen hintereinander durchzuführen und nacheinander die mit Meßwerten beschriebenen Speicher externen Auswerteeinheiten zuzuführen. Andererseits ist es aber auch möglich, durch einfaches Umstecken der elektronischen Schaltmittel die Meßkluppe für eine Vielzahl höchst unterschiedlicher Anwendungsbereiche einsetzbar zu machen. Dies kann beispielsweise dadurch geschehen, daß die elektronischen Schaltmittel Speicher aufweisen, in denen Programme zum Erfassen von Meßwerten an Schlachtvieh oder an Baumstämmen oder an Käselaiben mit den zugehörigen Auswertungsroutinen enthalten sind.

Bei einer bevorzugten Ausgestaltung der Erfindung sind die Schaltmittel als Kleinrechner mit Tastatur und Anzeigeelementen ausgebildet.

Diese Maßnahme hat den Vorteil, daß alle während einer Vielzahl von Messungen erforderlichen Betätigungs- und Anzeigeelemente fest im Kleinrechner integriert sind. Der Benutzer der erfindungsgemäßen Meßkluppe kann demzufolge alle erforderlichen Messungen und Auswertungen, sofern diese vor Ort vorgenommen werden müssen, an einem einzigen Gerät, nämlich der Meßkluppe selbst, vornehmen. Es ist somit nicht mehr erforderlich, mit mehreren Geräten zu hantieren, für entsprechende Kabelverbindungen zu sorgen und dgl. mehr.

Beim Einsatz in Schlachthöfen kann auf diese Weise mit Hilfe von Reihenmessungen eine Klassifizierung der Schweinehälften vorgenommen werden, wobei auch entsprechende Protokolle vorbereitet und später ausgedruckt werden können. Derartige Messungen können insbesondere in Anwesenheit der anliefernden Züchter vorgenommen werden, so daß spätere Streitigkeiten über die Art der Messung und der Auswertung der Meßergebnisse vermieden werden.

Entsprechendes gilt im forstwirtschaftlichen Bereich, wenn beispielsweise bei Begehung eines Waldstücks durch Einsatz der Meßkluppe und entsprechende Auswertung des Meßwerte sofort bestimmt wird, welche Arbeiten ausgeführt, beispielsweise welche Bäume gefällt werden sollen, ohne daß die Bäume zunächst markiert und später wieder gefunden werden müssen.

Wenn hingegen eine Vielzahl von Messungen mit der erfindungsgemäßen Meßkluppe abgeschlossen ist, kann der Kleinrechner mit wenigen Handgriffen vom Läufer gelöst und zur Überspielung der Daten in ein Institut, ein Rechenzentrum oder dgl. gebracht werden. Durch Befestigen eines neuen Kleinrechners kann die Meßkluppe in diesem Fall sofort weiter verwendet werden, so daß auch ein optimaler zeitlicher Geräteeinsatz gewährleistet ist.

Bei einer bevorzugten Ausbildung der Erfindung weist der Kleinrechner eine Halteplatte auf, von der ein Abschnitt als ein Teil der formschlüssigen Führung ausgebildet ist, wobei die Halteplatte mit einem Führungsteil des Läufers verbindbar ist, von dem ein weiterer Abschnitt einen weiteren Teil der formschlüssigen Führung bildet.

Diese Maßnahme hat den Vorteil, daß eine besonders kompakte Bauweise entsteht, weil die Halteplatte des Kleinrechners selbst einen Teil der formschlüssigen Führung bildet. Außerdem ist auf diese Weise eine leichte Demontage der Meßkluppe möglich, beispielsweise um diese nach einem länger andauernden Gebrauch in stark verschmutzter Umgebung wieder zu reinigen.

Dies gilt insbesondere dann, wenn nach einer weiteren Ausgestaltung der Erfindung die Halteplatte auf das Führungsteil aufklipsbar ist.

Dies hat nämlich den Vorteil, daß der Kleinrechner mit einem Handgriff abgenommen und ebenfalls mit einem Handgriff wieder aufgesetzt werden kann, wobei gleichzeitig alle erforderlichen Verbindungen hergestellt werden können.

Bei einer bevorzugten Variante dieses Ausführungsbeispiels ist ein Längensensor am Kleinrechner angeordnet.

Diese Maßnahme, die auch dadurch möglich wird, daß die Halteplatte des Kleinrechners unmittelbar am Stab anliegt, hat den Vorteil, daß alle erforderlichen elektrischen Verbindungen innerhalb der Halteplatte ausgeführt werden können, so daß separate elektrische Verbindungsmittel nicht erforderlich sind.

Auch dies kommt der Betriebssicherheit der erfindungsgemäßen Meßkluppe zugute.

Bei einer weiteren bevorzugten Variante dieses Ausführungsbeispiels ist ein Sensor am Läufer angeordnet, und die lösbaren Verbindungsmittel weisen elektrische Verbindungsmittel auf.

Diese Maßnahme ist in den Fällen von Vorteil, in denen weitere Sensoren am Läufer selbst angeordnet werden sollen oder müssen.

Unter Inkaufnahme einer gewissen Verkomplizierung durch die zusätzlichen lösbaren elektrischen Verbindungsmittel kann in manchen Fällen eine Bereicherung der Meßmöglichkeiten erzielt werden, wie dies weiter unten noch geschildert werden wird.

Bei einem bevorzugten Ausführungsbeispiel der Erfindung weist der Stab im Querschnitt eine doppelprismatische Gestalt mit einem hohen rechteckförmigen Mittelabschnitt und flachen trapezförmigen Ober- bzw. Unterabschnitten auf.

Diese Maßnahme hat den Vorteil, daß der Stab besonders stabil ausgebildet werden kann und daß gleichzeitig eine optimale formschlüssige Führung möglich ist.

Bevorzugt ist bei diesem Ausführungsbeispiel ferner, wenn eine Längsmarkierung im Bereich der Breitseite des rechteckförmigen Mittelabschnitts angeordnet ist. Bei einer Variante hierzu kann eine Längsmarkierung alternativ oder zusätzlich auch im Bereich der Ober- bzw. Unterseite des trapezförmigen Ober- bzw Unterabschnitts angeordnet sein. Auch können mehrere Längsmarkierungen an mehreren Seiten des Stabes angeordnet werden.

Mit diesen Maßnahmen ist es in alternativer oder kumulativer Weise möglich, je nach geforderten Eigenschaften oder gewollten Einsatzfällen ein Optimum an mechanischer Stabilität bei präziser Führung zu erreichen.

Bei einem weiteren Ausführungsbeispiel der Erfindung ist die Längsmarkierung verdeckt im Stab angeordnet.

Diese Maßnahme, die beispielsweise durch Eingießen der Längsmarkierung in einen Kunststoff erreicht werden kann, bewirkt, daß die Längsmarkierung keinem Abrieb unterliegt, so daß sie auch im Langzeitgebrauch eine präzise Messung ermöglicht.

Bei einem weiteren Ausführungsbeispiel der Erfindung ist der Stab als Hohlprofil mit einem Hohlraum ausgebildet, und die Längsmarkierung ist an der Innenwand des Hohlraums angeordnet.

Diese Maßnahmen verbinden den Vorteil eines geringstmöglichen Gewichtes bei hoher mechanischer Stabilität des Stabes mit einem Minimum an Abnutzung für den Längsmaßstab, der im Inneren des Hohlraums gegenüber Umwelteinflüssen geschützt angeordnet ist.

Bei bevorzugten Ausführungsbeispielen der Erfindung ist der Läufer mit Laufflächeneinsätzen versehen, und der Stab liegt mit Schrägflächen seiner trapezförmigen Ober- bzw. Unterabschnitte nur an den Laufflächeneinsätzen an.

Diese Maßnahme hat den Vorteil, daß eine besonders präzise, gleichzeitig jedoch leichtgängige mechanische Führung erreicht wird.

Dieses Ziel wird auch dann erreicht, wenn der Stab aus einem Kunststoff besteht und die Laufflächeneinsätze aus einem Metall, vorzugsweise einem geschliffenen Bundmetall, bestehen.

Bei diesen Merkmalen macht man sich nämlich die Tatsache zunutze, daß bestimmte Kunststoffe besonders leicht auf geschliffenen Bundmetalloberflächen leiten.

Bei Ausführungsbeispielen der Erfindung ist der Läufer mit einer Durchgangsöffnung für den Stab versehen, und die Durchgangsöffnung ist nur im Bereich des Eintritts bzw. des Austritts des Stabes abschnittsweise mit der formschlüssigen Führung versehen.

Diese Lagerung des Läufers an zwei axial voneinander beabstandeten Stellen hat den Vorteil, daß ein besonders angenehmes "Schiebegefühl" entsteht, d.h. der Läufer läßt sich einerseits zwar sehr leichtgängig, andererseits aber auch in mechanisch präziser Führung auf dem Stab hin- und herbewegen.

Besonders bevorzugt ist ein Ausführungsbeispiel der Erfindung, bei dem der Läufer und der Stab im wesentlichen aus einem Kohlefaser-Epoxid-Verbund (CFK) bestehen.

Diese Maßnahme hat nämlich den Vorteil, daß minimales Gewicht mit maximaler Festigkeit und gleichzeitig optimaler Resistenz gegenüber Umwelteinflüssen, insbesondere Verschmutzung und Feuchtigkeit, erreicht wird.

Bei einer bevorzugten Variante dieses Ausführungsbeispiels bestehen ein Führungsteil und eine Halteplatte des Läufers sowie die Meßschnäbel aus einem massiven Kohlefaser-Epoxid-Verbund, während der Stab als Hohlprofil aus einem KohlefaserEpoxid-Verbund ausgebildet ist.

Diese Maßnahmen haben den Vorteil, daß sie optimale Stabilität mit geringstmöglichem Gewicht verbinden. Zu berücksichtigen ist nämlich, daß Meßkluppen der vorliegenden Art in der Regel über weite Strecken von ihren Benutzern getragen werden müssen, so daß besondere Anforderungen hinsichtlich des Gewichts, wie auch hinsichtlich der Unempfindlichkeit gegenüber Umwelteinflüssen wie Regen, Schnee oder Verschmutzung aller Art bestehen.

Bei weiteren Ausführungsbeispielen der Erfindung ist die Längsmarkierung als leiterförmiges Gebilde aus ferromagnetischem Material mit um jeweils eine Teilung in Längsrichtung versetzten Sprossen ausgebildet, und der Längensensor ist mit einem Dauermagneten sowie einem magnetfeldempfindlichen Element über die Sprossen des Gebildes hinweg parallel zu dem Gebilde im Abstand von diesem verschiebbar.

Diese Maßnahme hat den Vorteil, daß bei extrem einfach ausgebildeter, rein passiver Längsmarkierung der erforderliche Meßeffekt dadurch erzeugt wird, daß das vom Dauermagneten erzeugte Magnetfeld beim Verschieben des Läufers durch die vorbeiwandernden Sprossen moduliert wird und diese Modulation mittels des magnetfeldempfindlichen Elements erkannt werden kann.

Alternativ hierzu kann die Längsmarkierung als Reihe von um jeweils eine Teilung in Längsrichtung versetzter Dauermagnete ausgebildet sein, wobei im Abstand von den Dauermagneten der Längensensor mit einem magnetfeldempfindlichen Element parallel zu der Reihe verschiebbar ist.

Diese Maßnahme hat den Vorteil, daß auf dem Läufer nur ein magnetfeldempfindliches Element, nicht hingegen ein separater Dauermagnet erforderlich ist, allerdings sind Dauermagnete in diesem Fall für die Bildung der Längsmarkierung selbst vorzusehen.

Bei den vorstehend erläuterten Ausführungsbeispielen wird eine besonders gute Wirkung dadurch erzielt, daß das magnetfeldempfindliche Element als Differentialelement, vorzugsweise als Differential-Feldplatte oder Differential-Hall-Element, in Brückenschaltung ausgebildet ist.

Diese Maßnahme hat den Vorteil, daß Schwankungen der Meßbedingungen, insbesondere Temperaturschwenkungen, effektiv kompensiert werden können.

Bei einer weiteren Variante dieser Ausführungsbeispiele ist neben dem magnetfeldempfindlichen Element ein weiteres magnetfeldempfindliches Element im Längsabstand eines Vielfachen der Teilung zuzüglich oder abzüglich eines Viertels der Teilung angeordnet.

Diese Maßnahme hat zum einen den Vorteil, daß durch Auswertung der Phasenbeziehung der beiden von den magnetfeldempfindlichen Elementen erzeugten Signale eine Aussage darüber möglich ist, in welche Richtung sich der Läufer auf dem Stab bewegt, andererseits kann aber durch an sich bekannte Auswerteschaltungen in diesem Falle erreicht werden, daß eine hoch aufgelöste Längenmessung mit der Genauigkeit eines Viertels der Teilung möglich ist.

Bei weiteren Ausführungsbeispielen der Erfindung sind die Meßschnäbel an ihren einander zuweisenden Längskanten mit Hartstoffaufsätzen, vorzugsweise auf Edelstahl, versehen.

Diese Maßnahme hat den Vorteil, daß die mechanisch am meisten belasteten Oberflächen, nämlich die Meßkanten der Meßschnäbel, optimal geschützt sind.

Bei weiteren Ausführungsbeispielen der Erfindung ist eine Längskante eines nicht-verschwenkbaren Meßschnabels mit einem Kraftsensor versehen, mit dem die Zudrückkraft der Meßschnäbel bei eingeschlossenem Meßobjekt erfaßbar ist.

Diese Maßnahme hat den Vorteil, daß den besonderen Verhältnissen Rechnung getragen werden kann, die dann vorliegen, wenn mit der erfindungsgemäßen Meßkluppe Meßobjekte ausgemessen werden sollen, die eine verformbare Konsistenz aufweisen. Dies ist beispielsweise bei Schlachtvieh oder bei Teilen von Schlachtvieh der Fall, wie sie erfindungsgemäß auf Schlachthöfen ausgemessen werden können, um sich zumindest grob einen Überblick über die erzielbare bzw. erzielte Menge des Fleiches, der Muskelfleischprozente, der Handelsklassen und dgl. verschaffen zu können. Das Meßergebnis hängt nämlich bei diesem Einsatzbereich von Meßkluppen erheblich von der Kraft ab, mit der der Benutzer die Meßkluppe auf das Meßobjekt, beispielsweise eine Schweinehälfte, drückt. Entsprechendes gilt bei der Ausmessung von Käselaiben und dgl..

Zur Vermeidung von Mißverständnissen sei an dieser Stelle erwähnt, daß die vorstehend erläuterte Anordnung eines Kraftsensors an einem Meßschnabel nicht mit der eingangs erläuterten Anordnung gemäß dem Dokument DE-A-28 32 986 vergleichbar ist. Während nämlich bei jener bekannten Schieblehre der bewegliche Meßschenkel in Abweichung von sonstigen Konstruktionen nicht starr am Läufer sondern vielmehr verschwenkbar angeordnet war und eine gewisse Verschwenkbewegung ausdrücklich zugelassen wurde, um ein Verkanten des Meßschnabels zu erkennen, wird bei der erfindungsgemäßen Meßkluppe größter Wert darauf gelegt, daß der mit einem Kraftsensor versehene Meßschnabel sich starr am Läufer oder am Stab befindet, und nicht verkantet wird Der Kraftsensor soll es vielmehr gestatten, mit einer vorbestimmten, genormten Andrückkraft an das verformbare Meßobjekt heranzugehen, so daß bei solchen Meßobjekten immer mit derselben Zudrückkraft gemessen wird Bei der erfindungsgemäßen Meßkluppe ist daher auch gleichgültig, in welchem Abstand vom Stab das Meßobjekt von den Meßschnäbeln eingeschlossen wird, weil die Meßschnäbel innerhalb der hier interessierenden Toleranz nur in Richtung des Stabes verschiebbar sind. Bei der bekannten Schieblehre spielt hingegen der Angriffspunkt der Meßschnäbel am Meßobjekt eine große Rolle, weil die Verkantungsbewegung eines Meßschnabels erkannt werden soll und naturgemäß ein Meßschnabel umso mehr verkantet wird, je weiter außen er an dem Meßobjekt angreift, mit anderen Worten, je größer das auf den Meßschnabel beim Zudrücken ausgeübte Drehmoment ist.

Bei einer bevorzugten Weiterbildung des zuvor geschilderten Ausführungsbeispiels ist vorgesehen, daß der Kraftsensor an eine Schwellwertstufe angeschlossen ist, deren Ausgangssignal bei Überschreiten eines vorgegebenen Grenzwerts des Kraftsensor-Signals den Augenblickswert des Längensensors festhält.

Auf diese Weise ist es vorteilhaft möglich, in der beschriebenen Weise eine Eichung des Meßergebnisses auf einen vorbestimmten normierten Kraftwert zu erzielen, weil bei Erreichen der vorgegebenen Kraft (und damit eines definierten Zusammendrückens des "weichen" Meßobjekts) der Längenwert gespeichert wird. Alternativ kann diese Speicherung auch dadurch erfolgen, daß bei Erreichen des vorgegebenen Kraftwerts die weitere Auslenkung des Läufers auf dem Stab mechanisch verriegelt wird.

Bei einer bevorzugten Ausführungsform der Erfindung wird die Positionsmarke dadurch gebildet, daß die Längenmarkierung ferner mit dem Positionssensor zusammenwirkt und in ihrer Längenausdehnung derart begrenzt ist, daß beim Anlegen der Meßschnäbel aneinander der Positionssensor außer Wechselwirkung mit der Längenmarkierung tritt.

Diese Maßnahme hat den Vorteil, daß die Position "Meßschnäbel geschlossen" in besonders einfacher Weise angezeigt werden kann, weil nur in dieser Position der Positionssensor ein Nullsignal erzeugt, das dann unmittelbar zum Eichen der Elektronik verwendet werden kann.

Besonders bevorzugt ist bei diesem Ausführungsbeispiel ferner, wenn das leiterförmige Gebilde auf dem Stab angeordnet ist und in einem Abstand von dem Meßschnabel des Stabes endet, wobei der Positionssensor auf dem Läufer in einer mit einer Meßkante des Meßschnabels des Läufers im wesentlichen fluchtenden Lage angeordnet ist und der Positionssensor mit einem durchgehenden Holm des Gebildes zusammenwirkt.

Diese Maßnahme hat den Vorteil, daß gesonderte Positionsmarken nicht mehr erforderlich sind, weil die bereits weiter oben erläuterte leiterförmige Ausbildung der Längsmarkierung selbst ausgenutzt werden kann. Der Positionssensor befindet sich nämlich in allen geöffneten Stellungen der Meßkluppe oberhalb des durchgehenden Holms der Leiter, so daß er kontinuierlich ein Signal "Meßkluppe auf" abgibt. Nur im geschlossenen Zustand der Meßschnäbel entfernt sich der Positionssensor seitlich von dem in Längsrichtung zuvor endenden Holm des leiterförmigen Gebildes und zeigt somit nur in dieser Stellung das bereits erläuterte Nullsignal an.

Bei einem weiteren Ausführungsbeispiel der Erfindung ist der Kleinrechner in CMOS-Technik aufgebaut.

Diese Maßnahme hat den Vorteil, daß der Stromverbrauch des Rechners minimal ist, was bei tragbaren Geräten angesichts der begrenzten Speicherfähigkeit von Akkus bei geringstmöglichem Gewicht von besonderer Bedeutung ist.

Bei einem weiteren Ausführungsbeispiel der Erfindung ist der Kleinrechner mit einer genormten Schnittstelle zum Anschluß an externe Rechner versehen.

Diese Maßnahme hat den bereits eingangs erläuterten Vorteil, daß der Kleinrechner als Ganzes unmittelbar mit einem größeren Rechner in Verbindung treten kann, um weitergehende Analysen der erfaßten Meßwerte durchzuführen.

Bei einem weiteren Ausführungsbeispiel der Erfindung ist der Kleinrechner mit einem demontierbaren Speicher versehen.

Diese Maßnahme hat den Vorteil, daß auch die im Speicher abgelegten Meßwerte alleine aus dem Kleinrechner entnommen und der Kleinrechner alsdann mit einem neuen Speicher wieder für weitere Messungen vorbereitet werden kann. Es versteht sich, daß hierbei unter "Speicher" sowohl ein Meßwertspeicher wie auch ein Programmspeicher verstanden werden kann, so daß ein Speicherwechsel nicht nur die Möglichkeit der Aufnahme neuer Meßwerte eröffnet sondern auch die Möglichkeit, die Meßkluppe für andere, möglicherweise völlig unterschiedliche Meßaufgaben einsetzbar zu machen. Dies hat nicht nur im praktischen Einsatz der erfindungsgemäßen Meßkluppe den Vorteil, daß man hinsichtlich des Anwendungsbereichs der Meßkluppe in großem Umfange frei ist, es ergibt sich vielmehr auch auf Seiten des Herstellers der wesentliche Vorteil, daß Meßkluppen für verschiedenste Anwendungen in identischer Form hergestellt werden können, wobei die anwendungsspzzifischen Vorkehrungen alleine in dem austauschbaren Speicher getroffen werden.

Bevorzugt ist, wenn der Speicher ein mittels UV-Licht löschbarer Baustein ist.

Dies hat den Vorteil, daß die Speicher auch unter rauhen Umweltbedingungen die in ihnen gespeicherten Informationen nicht verlieren, so daß beispielsweise ein Waldarbeiter oder ein Schlachthofarbeiter einen derartigen Baustein in der Hosentasche mit sich führen kann, ohne daß Meßwertverfälschungen zu befürchten sind.

Bei einem weiteren Ausführungsbeispiel der Erfindung ist der Speicher als elektronisches Bauelement auf einer Platine angeordnet und die Platine ist in eine Nut eines Aufnahmeraums eines am Läufer angeordneten Kleinrechners einschiebbar.

Diese Maßnahme hat den Vorteil, daß neben neben elektronischen Speicherelement selbst auch noch die erforderlichen Anschlüsse oder Peripheriebauelemente auf einer Platine angebracht werden und gesamthaft durch Ein- und Ausstecken ausgetauscht werden können.

Besonders bevorzugt ist eine Variante dieses Ausführungsbeispiels, bei der der Aufnahmeraum. im wesentlichen zylindrisch ausgebildet und mittels einer Schraubkappe dicht verschließbar ist.

Diese Maßnahme hat den Vorteil, daß die eingesetzte Platins feuchtigkeitsdicht abgeschlossen werden kann, so daß trotz der Austauschbarkeit der Platinen die Meßkluppe auch unter rauhen Umweltbedingungen, insbesondere bei hoher Umgebungsfeuchtigkeit eingesetzt werden kann.

Eine weitere Variante des Ausführungsbeispiels zeichnet sich dadurch aus, daß entlang einer Längskante des im wesentlichen quaderförmigen Kleinrechners nebeneinander zwei Aufnahmeräume für Batterien bzw. die Platine angeordnet und mittels Schraubkappen dicht verschließbar sind.

Diese Maßnahme hat den Vorteil, daß nicht nur für die Batterien, ebenso wie vorstehend beschrieben für die Platinen, eine feuchtigkeitsdichte Aufbewahrung möglich ist, die Anordnung der Aufnahmeräume entlang der Längskante des quaderförmigen Kleinrechners hat darüberhinaus den Vorteil, daß die Aufnahmeräume leicht zugänglich werden, weil das quaderförmige Gehäuse des Kleinrechners über den Stab vorsteht, so daß die Schraubkappen von der Seite her leicht erfaßt und gedreht werden können. Außerdem ergibt sich auf diese Weise ein optisch ansprechendes Gehäuse.

Weiterhin ist bei diesem Ausführungsbeispiel bevorzugt, wenn der Kleinrechner ein aus zwei Halbschalen bestehendes Gehäuse aufweist, wenn in der Anlageebene der Halbschalen umlaufende Nuten zur Aufnahme von Dichtungen vorgesehen sind, und wenn die Anlageebene die Aufnahmeräume axial schneidet.

Diese Maßnahme hat den Vorteil, daß auch hinsichtlich des übrigen Innenraums des Kleinrechnergehäuses eine absolut feuchtigkeitsdichte Anordnung entsteht, weil beim Aufeinandersetzen und ggf. Aufeinanderschrauben der beiden Halbschalen die Dichtungen in die umlaufenden Nuten eingepreßt werden und das Gehäuse so allseits feuchtigkeitsdicht verschließen. Das Vorsehen der Anlageebene derart, daß die Aufnahmeräume axial geschnitten werden, hat den Vorteil, daß beim Aufschrauben der Schraubkappen die Halbschalen ebenfalls miteinander verschraubt werden, weil der Außengewindeabschnitt des Gehäuses auf beiden Halbschalen angeordnet ist, die demzufolge zusammengefügt werden, wenn die Schraubkappen aufgeschraubt werden.

Eine weitere bevorzugte Ausgestaltung der Erfindung zeichnet sich dadurch aus, daß an die untere Halbschale ein vorzugsweise unter 90° abstehender Griff angesetzt ist.

Diese Maßnahme hat den Vorteil, daß die Handhabung der erfindungsgemäßen Meßkluppe sehr erleichtert wird, weil der Läufer von unten mittels des Griffs gehalten werden kann, so daß auch ein mechanisches Widerlager für den Fall entsteht, daß der Benutzer der Meßkluppe mit der anderen Hand die Tasten der Tastatur des Kleinrechners drücken will.

Es wurde bereits eingangs erwähnt, daß die erfindungsgemäße Meßkluppe für eine Vielzahl von Einsatzfällen vorgesehen ist.

Besonders bevorzugt ist eine erste Anwendung der Meßkluppe zum Vermessen von Schlachtvieh, insbesondere von Schlachtviehhälften, wobei die Schaltmittel aus Meßwerten Klassifizierungsparameter des Schlachtviehs wie Muskelfleischprozente, Handelsklassen usw. bestimmen.

Eine weitere Verwendung der erfindungsgemäßen Meßkluppz dient zum Vermessen von Baumstämmen, wobei die Schaltmittel aus Meßwerten weiterer Abmessungen der Baumstämme, Holzmengen, Preise usw. bestimmen.

Schließlich dient eine weitere erfindungsgemäße Verwendung der Meßkluppe zum Vermessen von Käselaiben, wobei die Schaltmittel aus Meßwerten den Reifegrad, Mengen, Preise usw. bestimmen.

Diese Verwendungen haben alle den Vorteil, daß mit einer verhältnismäßig einfachen mechanischen Meßeinrichtung, in Verbindung mit einem integrierten elektronischen Auswertsystem eine Reihe von weiteren Meßwerten der Meßobjekte bestimmt oder nach Klassifikationsmerkmalen kommerzielle Meßergebnisse errechnet werden können.

Weitere Vorteile der Erfindung ergeben sich aus der Beschreibung und der beigefügten Zeichnung.

Ausführungsbeispiele der Erfindung sind in der Zeichnung dargestellt und werden in der nachfolgenden Beschreibung näher erläutert.

Es zeigen

Fig. 1 eine äußerst schematisierte Darstellung zur Veranschaulichung des erfindungsgemäßen Vermessens einer Schweinehälfte;

Fig. 2 eine ebenfalls äußerst schematisierte Darstellung zur Erläuterung des erfindungsgemäßen Vermessens eines Baumstamms;

Fig. 3 eine gleichfalls äußerst schematisierte Darstellung des erfindungsgemäßen Vermessens eines Käselaibes;

Fig. 4 eine Draufsicht, teilweise vereinfacht, teilweise aufgebrochen und abgebrochen, eines Ausführungsbeispiels einer erfindungsgemäßen Meßkluppe;

Fig. 5 eine vereinfachte Schnittdarstellung englang der Linie V-V von Fig. 4;

Fig. 6 eine Darstellung ähnlich Fig. 5, in vergrößertem Maßstab und im Ausschnitt;

Fig. 7 eine abgebrochene Draufsicht auf einen Stab, wie er beim Ausführungsbeispiel gemäß Fig. 6 verwendet wird;

Fig. 8 eine noch weiter vergrößerte Ausschnitts-Schnittdarstellung zur Erläuterung des verwendeten Meßeffekts;

Fig. 9 eine Draufsicht auf einen Ausschnitt der Anordnung gemäß Fig. 8, von oben;

Fig. 10 eine erste Alternative zur Darstellung gemäß Fig. 8;

Fig. 11 eine zweite Alternative zur Darstellung gemäß Fig. 8;

Fig. 12 eine ausschnittsweise Darstellung, in stark vergrößertem Maßstab, der freien Enden zweiter Meßschnäbel zur Erläuterung eines weiteren Ausführungsbeispiels der Erfindung;

Fig. 13 einen stark schematisierten Stromlaufplan zur Erläuterung eines erfindungsgemäß verwendeten Kleinrechners;

Fig. 14 eine perspektivische Ansicht eines weiteren Ausführungsbeispiels einer erfindungsgemäßen Meßkluppe;

Fig. 15 eine Seitenansicht, teilweise abgebrochen und in vergrößertem Maßstab, der Meßkluppe gemäß Fig. 14;

Fig. 16 eine Draufsicht, teilweise abgebrochen, der Meßkluppe gemäß Fig. 14;

Fig. 17 eine Draufsicht einer Gehäusehalbschale wie sie für die Meßkluppe gemäß Fig. 14 verwendet werden kann;

Fig. 18 eine Schnittdarstellung, in weiter vergrößertem Maßstab, entlang der Linie XVIII-XVIII von Fig. 17.

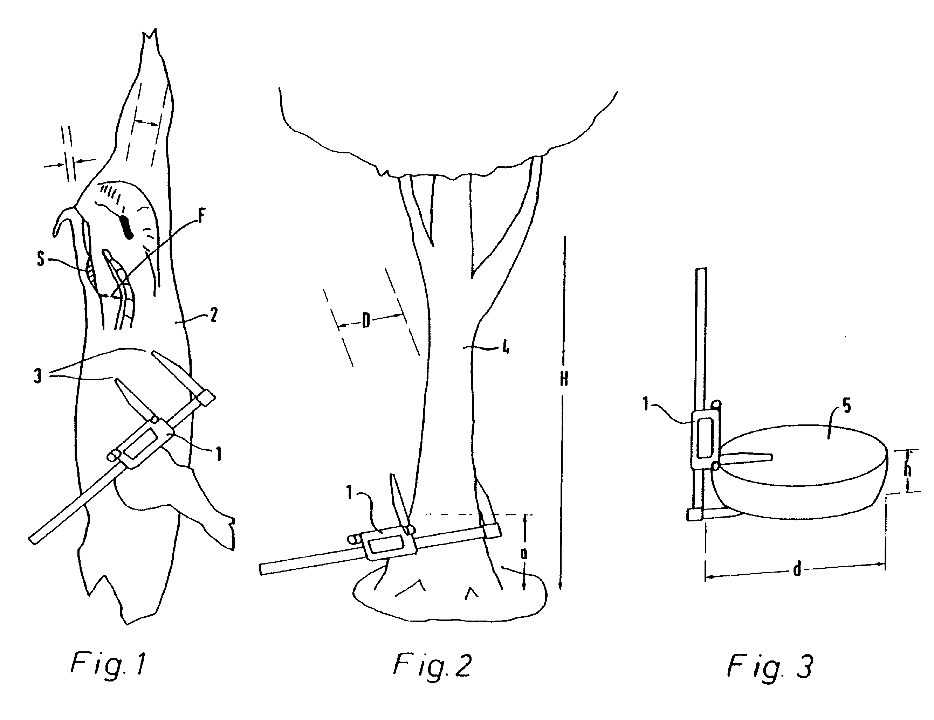

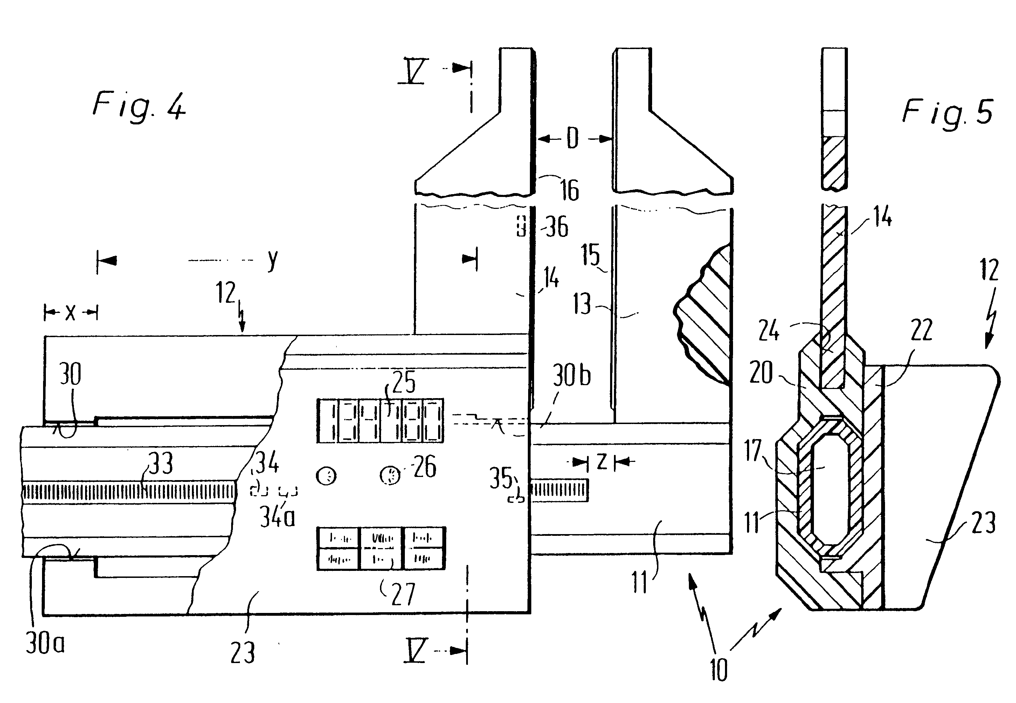

In Fig 1 bezeichnet 1 eine Meßkluppe, d.h. ein schieblehrenähnliches Meßgerät, wie es weiter unten anhand der Fig. 4 bis 18 noch in allen Einzelheiten erläutert werden wird.

Die Meßkluppe 1 wird bei der Darstellung von Fig. 1 dazu verwendet, um eine Schweinehälfte 2 an definierten Punkten 3 zu vermessen. Die Punkte 3 sind anatomisch definierte Punkte der Schweinehälfte 2, um insbesondere im Lendenbereich der Schweinehälfte 2 die Dicke von Muskelfleisch- und Fettschichten auszumessen. Mit Hilfe der Meßwerte, die durch Ausmessen des Abstandes der definierten Punkte 3 gewonnen werden, können mittels vorgegebener Algorithmen Klassifizierungsparameter berechnet werden. So kann zunächst mittels einer vorgegebenen Formel der Anteil des Muskelfleichs am Gesamtfleisch, d.h. die sogenannten Muskelfleischprozente bestimmt werden. Diese Muskelfleischprozente können dann über eine vorgegebene Tabelle in eine Handelsklasse umgerechnet werden. Wenn die Schweinehälfte 2 während der Messung an einer Waage hängt oder das Gewicht der Schweinehälfte 2 bekannt ist, kann das Gewicht der Schweinehälfte 2 in einer Auswerteinheit der Meßkluppe 1 zusätzlich eingegeben werden, so daß danach dann auch der Gesamtpreis der Schweinehälfte 2 bestiemt werden kann, wenn zusätzlich der Kilopreis eingegeben wird.

Die erfindungsgemäße Meßkluppe 1 kann in dieser Weise z.B. zur Vermessung von genormten Abmessungen von Schweinehälften eingesetzt werden, wie dies in der "Verordnung zur Änderung handelsklassenrechtlicher Vorschriften" der Bundesrepublik Deutschland vom 18.12.1986 angegeben ist.

Nach der genannten Vorschrift müssen Schweineschlachtkörper, die nach einer gesetzlichen Handelsklasse zum Verkauf vorrätig gehalten werden, nach vorbestimmten Kriterien vermessen werden.

Hierzu muß der Schlachtkörper möglichst bald nach der Schlachtung, spätestens aber 45 Minuten nach dem Stechen des Schweines gewogen werden. Zum Vermessen der Schweinehälfte wird ein Verfahren durchgeführt, bei dem zunächst das in Fig. 1 eingezeichnete "Speckmaß" (S) gemessen wird. Hierunter versteht man die Speckdicke, gemessen an der dünnsten Stelle des Speckes (einschließlich Schwarte) über dem Musculus Glutaeus Medius, wobei die Messung in Millimetern erfolgt.

Alsdann wird das sogenannte "Fleischmaß" (F) bestimmt. Hierunter versteht man die Stärke des Lendenmuskels, gemessen als kürzeste Verbindung des vorderen (cranialen) Endes des Musculus Glutaeus Medius zur oberen (dorsalen) Kante des Wirbelkanales, wobei diese Messung ebenfalls in Millimetern erfolgt.

Der sogenannte Muskelfleischanteil kann alsdann rechnerisch ermittelt werden durch Einsetzen des Speckmaßes (S) und des Fleischmaßes (F) in die Formel:

Muskelfleischanteil MF (%) = 47,978 + (26,0429 x S/F) + (4,5154 x $\sqrt{F}$) - (2,5018 x lgS) - (8,4212 x $\sqrt{S}$)

Aus dem so ermittelten Muskelfleischanteil MF kann nun die Handelsklasse für verschiedene Typen von Schweineschlachtkörpern ermittelt werden, wobei z. B. ein Muskelfleischanteil MF von mehr als 55 % einer Handelsklasse E entspricht, während bei niedrigeren Prozentzahlen die Handelsklassen U, R, O und bei einem Muskelfleischanteil MF von weniger als 40 % eine Handelsklasse P anzusetzen ist.

Die genannte Verordnung sieht weiterhin vor, daß im Falle einer Ermittlung des Muskelfleischanteiles einer Schweinehälfte ein Protokoll anzufertigen ist, das mindestens die fortlaufende Schlachtnummer, die einzelnen Meßwerte, das daraus errechnete Ergebnis sowie den Schlachttag und den Namen oder das Rennzeichen des Klassifizierers enthalten. Dieses Protokoll ist nach der genannten Verordnung mindestens sechs Monate lang geordnet aufzubewahren.

Aus den vorstehenden Erläuterungen wird leicht erkennbar, daß die erfindungsgemäße Meßkluppe für den genannten Anwendungsfall optimal einsetzbar ist, weil nicht nur die erforderlichen Maße (Speckmaß S und Fleischmaß F) mit hoher Zuverlässigkeit und Genauigkeit ermittelt werden können, es kann darüber hinaus auch z. B. der oben formelmäßig angegebene Algorithmus für den Muskelfleischanteil MF in Prozent durch Abarbeiten einer geeigneten Anwender-Software ermittelt werden und auch die Umsetzung der ermittelten Muskelfleischanteile in Handelsklassen kann durch einfach Tabellierung des Ergebnisses vorgenommen werden. Schließlich stellt auch die genaue Protokollierung und Archivierung der Messung kein Problem dar, weil auch diese Arbeiten von den elektronischen Schaltmitteln der erfindungsgemäßen Meßkluppe leicht durchgeführt werden können.

Es darf jedoch nochmals betont werden, daß der Anwendungsbereich der erfindungsgemäßen Meßkluppe auch im Schlachthofbereich sich nicht auf derartige gesetzlich vorgeschriebene Verfahren beschränkt, es können selbstverständlich darüber hinaus auch andere übliche Meßungen an Schlachtvieh im ungeschlachteten oder geschlachteten Zustand vorgenommen werden., so z. B. die Messung des sogenannten Schinkenwinkels ebenfalls an Schweinehälften und andere mehr.

Fig. 2 zeigt einen weiteren Anwendungsfall der erfindungsgemäßen Schweinekluppe 1, hier zum Vermessen eines Baums 4. Die Meßkluppe 1 wird hierzu in einem vorbestimmten Abstand a vom Boden an den Baumstamm angelegt und es wird der Durchmesser D des Baumstamms an dieser Position a bestimmt. Es ist aus der Forstwirtschaft bekannt, daß bei Kenntnis der Baumart und bei Kenntnis des Standorts des Baums 4 aus diesem Wert D die Höhe H des Baums mit hinreichender Genauigkeit bestimmt werden kann. Wenn man also in die Auswerteinheit der Meßkluppe 1 die genannten Daten, also die Baumart, den Standort und dgl. eingibt, so kann der gemessene Durchmesser D sofort in die Höhe H des Baums und, bei bekannter Konizität des Baumstamms auch in das nutzbare Holzvolumen des Baums 4 umgerechnet werden.

Fig. 3 zeigt einen weiteren Anwendungsfall, bei dem die Meßkluppe 1 dazu benutzt wird, um einen Käselaib 5 zu vermessen. Hierzu kann beispielsweise die Höhe h oder der Durchmesser d des üblicherweise kreisscheibenförmigen Käselaibs 5 ausgemessen werden. Da die Käselaibe 5 zunächst in einer Form mit vorgegebenen Abmessungen hergestellt werden, ist die Abweichung der Abmessungen h und d von den Abmessungen der Form ein Maß für den Reifegrad des Käselaibs 5. Man kann also auch bei diesem Anwendungsfall für die erfindungsgemäße Meßkluppe 1 entsprechende Algorithmen in der Auswerteinheit der Meßkluppe 1 vorgeben, so daß die gemessenen Werte h und d unmittelbar in einen Parameter umgesetzt werden können, der für den Reifegrad des Käselaibs 5 aussagekräftig ist.

Selbstverständlich können bei allen vorgenannten Anwendungsfällen die Meßwerte sowie die daraus ermittelten Parameter auch für eine Vielzahl von Messungen gespeichert und später ausgewertet werden, wie dies weiter unten noch erläutert werden wird.

In den Fig. 4 und 5 bezeichnet 10 insgesamt ein praktisches Ausführungsbeispiel einer erfindungsgemäßen Meßkluppe, wie sie für einen der zuvor anhand der Fig. 1 bis 3 geschilderten Anwendungsfälle oder auch für andere Anwendungsfälle einsetzbar ist.

Auf einem im Querschnitt doppelprismatisch ausgebildeten Stab 11 ist ein Läufer 12 längsbeweglich angezordnet. Der Stab 11 ist an seinem einen Ende mit einem rechtwinklig abstehenden ersten Meßschnabel 13 versehen, dem in paralleler Ausrichtung ein zweiter Meßschnabel 14 am rechten Ende des Läufers 12 (in der Darstellung von Fig. 4) gegenübersteht. An ihren einander zuweisenden Meßkanten sind die Meßschnäbel 13, 14 mit Edelstahlbelägen 15, 16 versehen, um deren mechanische Festigkeit zu erhöhen, wenn die Meßschnäbel 13, 14 immer wieder harte Meßobjekte zwischen sich einschließen sollen.

Wie man aus der Schnittdarstellung von Fig. 5 erkennen kann, umschließt der doppelprismatische Stab 11 einen Hohlraum 17. Der Stab 11 wird auf fünf der insgesamt acht Außenflächen der Doppelprismenform von einem Führungsteil 20 des Läufers 12 umgeben. Die übrigen drei Oberflächenabschnitte werden von einer Halteplatte 22 umgeben, auf die ein Kleinrechner 23 aufsetzbar ist. An der Oberseite des Führungsteils 20 ist eine Nut 24 zu erkennen, in die der zweite Meßschnabel 14 eingesetzt ist.

Der Kleinrechner 23 ist auf seiner vorzugsweise pultförmig ansteigenden Oberfläche mit zahlreichen Anzeige- und Betätigungselementen versehen. Eine Ziffernanzeige 25 kann beispielsweise den momentanen Abstand D zwischen den Meßkanten der Meßschnäbel 13, 14 anzeigen. Kontrollelemente 26 können z.B. die Betriebsbereitschaft oder die jeweilige Anzahl der bereits getätigten Messungen anzeigen. Mit einer Tastatur 27 können z.B. Meßparameter, beispielsweise Codezahlen für bestiemte Arten von Meßobjekten (im Falle des Ausmessens von Baumstämmen beispielsweise die Baumart oder der Festmeterpreis oder der Standort) eingegeben werden.

Um den Läufer 12 auf dem Stab 11 mechanisch präzise, gleichzeitig aber auch leichtgängig und verkantungsfrei zu führen, ist eine formschlüssige Führung 30, 30a, 30b ... nur an den seitlichen Rändern des Läufers 12, in Längsrichtung gesehen, vorgesehen. Man erkennt aus Fig. 4 deutlich, daß die Führungen 30, 30a, 30b sich nur über einen verhältnismäßig kleinen Abschnitt x der Länge des Läufers 12 erstrecken, während zwischen diesen Abschnitten x ein Freiraum y verbleibt, in dem der Läufer 12 nicht geführt ist. Bei einem praktischen Ausführungsbeispiel beträgt das Längenverhältnis y:x beispielsweise etwa 10:1 und es kann der Freiraum y z.B. in der Praxis 150 mm lang sein.

In Fig. 4 erkennt man ferner eine auf die Breitseite des Stabes 11 aufgebrachte magnetische Längsmarkierung 33. Auf dem Läufer 12 sind oberhalb der Längsmarkierung 33 Längensensoren 34, 34a angeordnet und am. rechten Rand des Läufers 12 ist noch ein Positionssensor 35 zu erkennen. Schließlich zeigt der zweite Meßschnabel 14 in der Nähe seiner Meßkante noch einen Kraftsensor 36. Die Funktionsweise dieser Sensoren 34, 34a, 35, 36 wird weiter unten noch ausführlich erläutert werden.

In Fig. 5 erkennt man in der vergrößerten Schnittdarstellung nochmals den doppelprismatischen Stab 11, der über einen mittleren rechteckförmigen Abschnitt sowie jeweils trapezförmige Ober- bzw. Unterabschnitte verfügt. Die Schrägflächen dieser trapezförmigen Abschnitte sind mit 40 bezeichnet. Nur in diesen schrägen Abschnitten 40 wird der Stab 11 formschlüssig durch die ihn umgebenden Elemente des Läufers 12 geführt. Hierzu sind beim Ausführungsbeispiel der Fig. 3 am Führungsteil 20 Laufflächeneinsätze 41 angeordnet und an der Halteplatte 22 ist ein entsprechender Laufflächeneinsatz 42 vorgesehen. Die Laufflächeneinsätze 41, 42 bestehen bevorzugt aus Metall, insbesondere einem Buntmetall wie Messing oder Bronze oder dgl. mit geschliffener oder polierter Oberfläche. Wenn der Stab 11 aus einem. Kunststoff, insbesondere aus einem KohlefaserEpoxid-Verbund (CFK) besteht, ergibt dies eine besonders leichtgängige und trotzdem mechanisch sichere, formschlüssige Führung.

Vorzugsweise bestehen die Läufer 12 und die Meßschnäbel 13, 14 aus massivem CFR, während der Stab 11 als CFK-Hohlprofil ausgebildet ist.

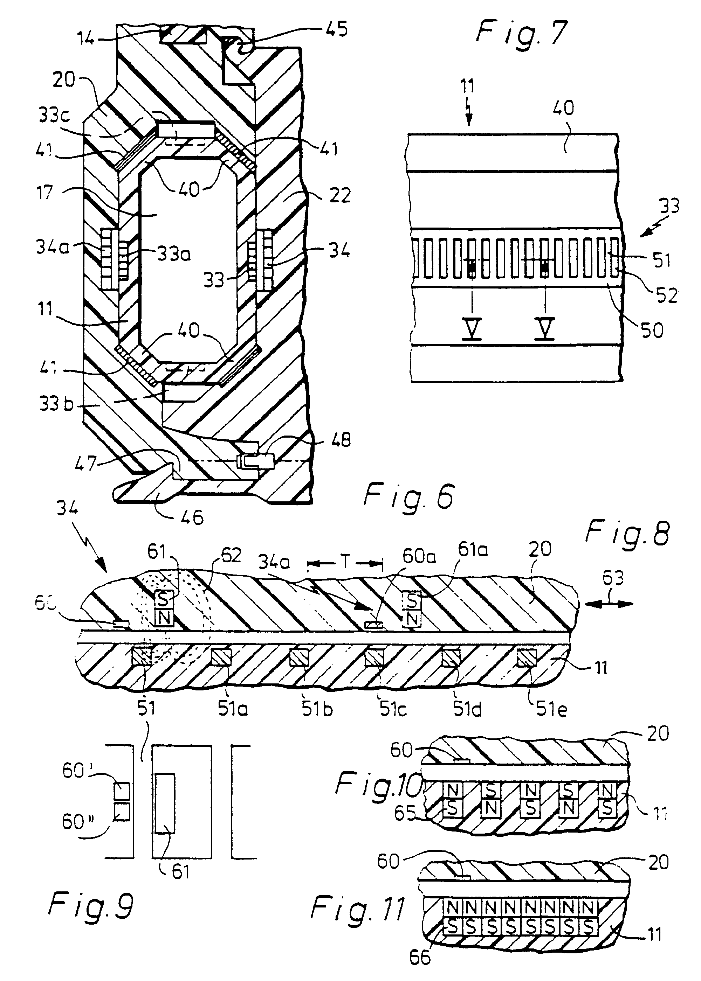

Wie man aus Fig. 6 weiter erkennt, ist die Halteplatte 22 am rechten oberen Ende mittels einer lösbaren Schwenkverbindung 45 am Führungsteil 20 eingehängt. Die Halteplatte 22 kann dann in Uhrzeigerrichtung um die Schwenkverbindung 45 herumgeschwenkt werden, bis ein elastischer Haken 46 um eine zugehörige Nase 47 des Führungsteils 20 greift. Auf diese Weise kann die Halteplatte 22 mit einem Griff am Führungsteil 20 eingeklipst werden. Zusammen mit diesem Einklipsvorgang kann bei Bedarf eine bei 48 angedeutete elektrische Steckverbindung geschlossen werden, sofern eine solche zum Verbinden der Teile auf der Halteplatte 22 mit den Teilen am Führungsteil 22 oder an sonstigen Elementen des Läufers 12 erforderlich sein sollte, wie dies weiter unten noch beschrieben wird.

In Fig. 6 ist ferner zu erkennen, daß die Anordnung der Längsmarkierung 33 am Stab 11 auf manigfaltige Weise vorgenommen werden kann. Mit 33 ist eine Längsmarkierung bezeichnet, die einem Längensensor 34 an der Unterseite der Halteplatte 22 gegenübersteht, so daß der Längensensor 34 unmittelbar mit dem auf der Halteplatte fest angeordnete Kleinrechner 23 verbunden werden kann. Mit 33a ist jedoch angedeutet, daß die Längenmarkierung sich auch auf der gegenüberliegenden Breitseite und zwar deren Außenseite des doppelprismatischen Stabes 11 befinden kann, wobei dann der Längensensor 34a dieser Längsmarkierung 33a gegenübersteht. Mit 33b ist angedeutet, daß die Längsmarkierung auch an der Schmalseite, d.h. dem flachen Teil des trapezförmigen Abschnitts des doppelprismatischen Stabes 11 angeordnet sein kann und zwar auf dessen Innenseite, so daß sich die Längsmarkierung 33b im ober am Hohlraum 17 befinder. Natürlich kann auch bei dieser Positionierung die Längsmarkierung an der Außenseite des Stabes 11 angeordnet sein, wie mit 33c angedeutet.

Weiterhin ist es im Rahmen der vorliegenden Erfindung durchaus auch möglich, die Längsmarkierung am Läufer 12, insbesondere am Führungsteil 20 oder an der Halteplatte 22 anzubringen und Sensoren am Stab 11 anzuordnen, wobei dann der Kleinrechner mit Elementen des Stabes 11 verbunden werden kann oder das Sensorsignal wieder auf den Läufer 12 zurückgeführt werden kann, je nachdem, wie dies im Einzelfall vorteilhaft sein sollte.

Fig. 7 zeigt in einer Seitenansicht die Einzelheiten eines Ausführungsbeispiel einer magnetischen Längsmarkierung 33. Die Längsmarkierung 33 ist in diesem Fall als leiterförmiges Gebilde ausgestaltet, bei dem zwischen zwei Holmen 50 Sprossen 51 sich mit zwischenräumen 52 abwechseln. Bei einem praktischen Ausführungsbeispiel kann hierzu ein ca. 12 mm breites und 0,5 mm dickes Metallband verwendet werden, das mit hoher Präzision so gestanzt werden kann, daß der Abstand von Sprosse 51 zu Sprosse 51, d.h. die Teilung T etwa 2 mm (mit hoher Reproduzierbarkeit) beträgt. Die Breite der Sprssen 51 kann z.B. 30 % der Teilung T betragen. Die Breite der Holmen 50 kann mit ca. 2 mm bemessen werden.

Die weiter vergrößerte Darstellung der Fig. 5 zeigt im seitlichen Schnitt die Sprossen 51, 51a, 51b, 51c, 51d, 51e ... im Stab 11, wobei diese Sprossen 51 ..... vesenkt, d.h. unterhalb der Oberfläche des CFK-Verbundes angeordnet sind.

Im Abstand oberhalb des Sprossen 51 ... befinder sich ein Längensensor 34, der bei diesem Ausführungsbeispiel aus einem magnetfeldempfindlichen Element 60, beispielsweise einer Feldplatte, einem Hallelement oder dgl. besteht. Neben dem magnetfeldempfindlichen Element 60 befindet sich ein Dauermagnet 61, dessen Feldlinien mit 62 angedeutet sind. Wie man leicht erkennen kann, werden die Feldlinien 62 durch die Sprossen 51 ... bei Bewegung des Führungsteils 20 in der mit 63 angedeuteten Richtung verzerrt, so daß die das magnetfeldempfindliche Element 60 duchsetzenden Feldlinien 62 im Takt des Vorbeiwanderns der Sprossen 51 ... moduliert werden.

Im seitlichen Längenabstand von dem Längensensor 34 ist bei diesem Ausführungsbeispiel ein weiterer Längensensor 34a zu erkennen, der ebenfalls aus einem magnetfeldempfindlichen Element 60a sowie einem Dauermagneten 61a besteht. Der Abstand des weiteren Längensensors 34a vom Längensensor 34 beträgt 3 1/4 Teilungen, allgemein ausgedrückt n Teilungen zuzüglich oder abzüglich 1/4 Teilung. Auf diese an sich bekannte Weise ist es möglich, sowohl die Verschieberichtung des Führungsteils 20 gegenüber dem Stand 11 zu ermitteln, wie auch die Auflösung der Längenmessung auf 1/4 Teilung zu erhöhen.

Die in Fig. 9 dargestellte Draufsicht auf die Meßanordnung des Längensensors 34 der Fig. 8 zeigt, daß auch statt eines einzigen magnetfeldempfindlichen Elements 60 deren zwei 60' und 60" eingesetzt werden können, um mit einer solchen Differential-Feldplatte oder Differential-Hallelement eine entsprechende Brückenschaltung zur Kompensation von Temperatur und dgl. aufzubauen.

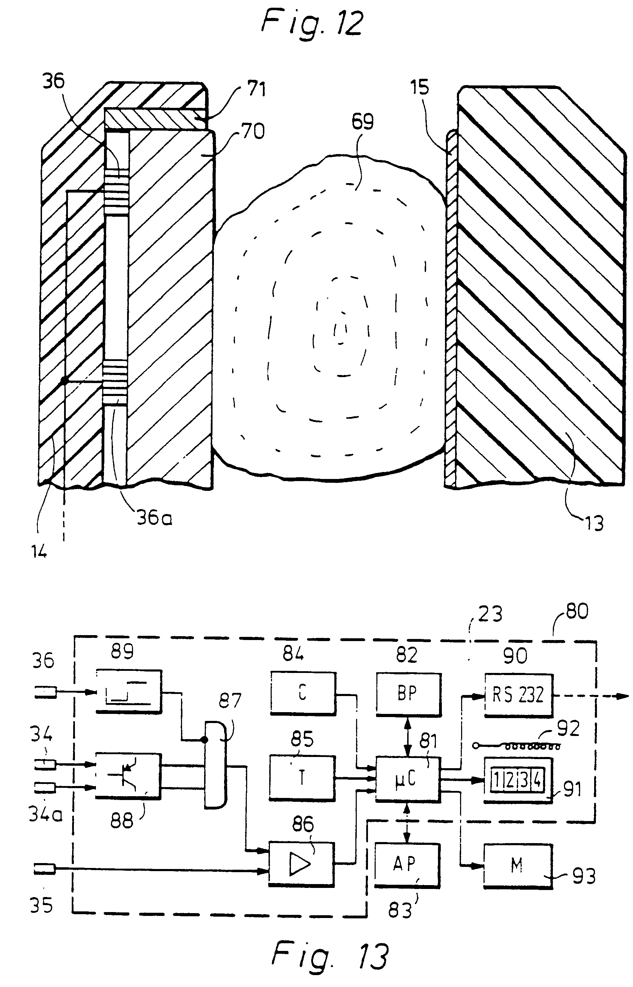

Bei der Variante der Fig. 10 ist das magnetfeldempfindliche Element 60 allein auf dem Führungsteil 20 angeordnet. Auf dem Stab 11 befindet sich eine Längsmarkierung in Gestalt axial versetzter Dauermagnete, die mit jeweils abwechselnd entgegengesetzten Polen an die Oberfläche des Stabes 11 oder dessen Nähe reichen. Auf diese Weise entsteht ein aktives, magnetisch diskontinuierliches Längenprofil auf dem Stab 11, das mittels des magnetfeldempfindlichen Elements 60 ohne weitere Hilfsmittel abgetastet werden kann.

Entsprechendes gilt für die weitere Variante gemäß Fig. 11, bei der lediglich Dauermagnete 66 ohne axialen Abstand eingebaut sind, wobei jeweils gleichnamige Pole der Dauermagnete 66 in die oder an die Oberfläche des Stabes 11 reichen. Auch in diesem Falle wird ein aktives, magnetisch diskontinuierliches Längsprofil erzeigt, das mittels des magnetfeldempfindlichen Elements 60 abgetastet werden kann.

Fig. 12 zeigt in vergrößerter Detaildarstellung ein zwischen den freien Enden der Meßschnäbel 13, 14 eingeschlossenes verform.bares Meßobjekt 69, beispielsweise die Schweinehälfte 2 gemäß Fig. 1 oder den Käselaib 5 gemäß Fig. 3.

Wenn das Meßobjekt 69 so weich ist, daß es bereits bei den Kräften verformt wird, wie sie üblicherweise beim Schließen der Meßschnäbel 13, 14 aufgebracht werden, so ist naturgemäß das Meßergebnis nicht reproduzierbar. Aus diesem Grunde ist beim Ausführungsbeispiel gemäß Fig. 12 die Meßkante des zweiten Meßschnabels 14 als in Längsrichtung beweglicher Meßbalken 70 ausgebildet, der in nur schematisch angedeuteten seitlichen Führungen 71 läuft. Unterhalb des Meßbalkens 70 befindet sich der oder befinden sich die mehreren Kraftsensoren 36, 36a, mit denen meßbar ist, welche Kraft durch die Meßschnäbel 13, 14 auf das Meßobjekt 69 ausgeübt wird. Die Führungen 71 sind dabei so ausgebildet, daß die mehreren Kraftsensoren 36, 36a gleichmäßig beaufschlagt werden, unabhängig davon, in welchem Abstand sich das Meßobjekt 69 vom Stab 11 befindet, ohne daß der Meßbalken 70 sich in den Führungen 71 verkanten kann.

Eine axiale Bewegung des Meßbalkens 70 ist nicht beabsichtigt oder allenfalls in dem Ausmaß, wie es erforderlich ist, um in den Kraftsensoren 36, 36a einen ausreichenden. Meßeffekt zu erzeugen. Es versteht sich, daß die dann erforderliche Axialbewegung des Meßbalkens 70 um mindestens eine Größenordnung kleiner sein muß als die gewünschte Längenauflösung der Meßkluppe 10.

Die in Fig. 13 dargestellte Auswerteschaltung des Kleinrechners 23 ist in einem wasserdichten Gehäuse 80 untergebracht, wie es weiter unten zu einem weiteren Ausführungsbeispiel der Erfindung noch näher erläutert werden wird. Kernstück der Auswerteschaltung ist ein Mikrocomputer 81, der zum einen mit einem eingebauten Betriebsprogrammspeicher 82 und zum anderen mit einem auswechselbaren Anwenderprogrammspeicher 83 verbunden ist. Der Anwenderprogrammspeicher 83 enthält beispielsweise Meßprogramme für verschiedene Einsatzbereiche, insbesondere die bereits ausführlich geschilderten Einsatzbereiche in Schlachthöfen, im Forstbetrieb sowie in der Käseherstellung.

Weitere Eingangssignale werden in den Mikrocomputer 81 über eine Kalender/Tagesuhr 84 zur Dokumentation des Meßzeitpunktes, über eine Tastatur 85 zur Eingabe von Meßparametern sowie von einer Meßelektronik 86 zugeführt, mit der Meßwerte der Sensoren 34, 34a, 35, 36 aufbereitet werden.

Die Meßelektronik 86 ist z.B. an eine Schaltung mit der Funktion eines UND-Gatters 87 angeschlossen, wobei das UND-Gatter 87 an zwei Eingängen mit Brückenverstärkern 88 der Längensensoren 34, 34a verbunden ist. Ein weiterer invertierter Eingang des UND-Gatters 87 führt auf eine Schwellwertstufe 89, die ihrerseits mit dem Kraftsensor 36 beaufschlagt ist. Schließlich ist ein weiterer Eingang der Meßelektronik 86 noch an den Positionssensor 35 angeschlossen.

Ausgangsseitig ist der Mikrocomputer 81 mit einer genormten Schnittstelle 90, beispielsweise einer RS-232-Schnittstelle verbunden, die eine Kommunikation des Mikrocomputers 81 mit einer externen Datenverarbeitungsanlage möglich macht.

Eine LCD-Anzeige 91 dient zur Anzeige momentaner Meß- oder errechneter Rennwerte. Eine Heizung 92 sorgt für eine Erwärmung der LCD-Anzeige 91, falls die Außentemperatur unter einen vorbestimmten Wert, z.B. 10° C. absinkt.

Schließlich können die Meßwerte oder daraus bereits errechnete Kennwerte auch in einem externen Speicher 93 abgelegt werden, der vorzugsweise als mit UV-Licht löschbares Speicherelement ausgebildet ist.

Die Wirkungsweise der Schaltung gemäß Fig. 13 ist wie folgt:

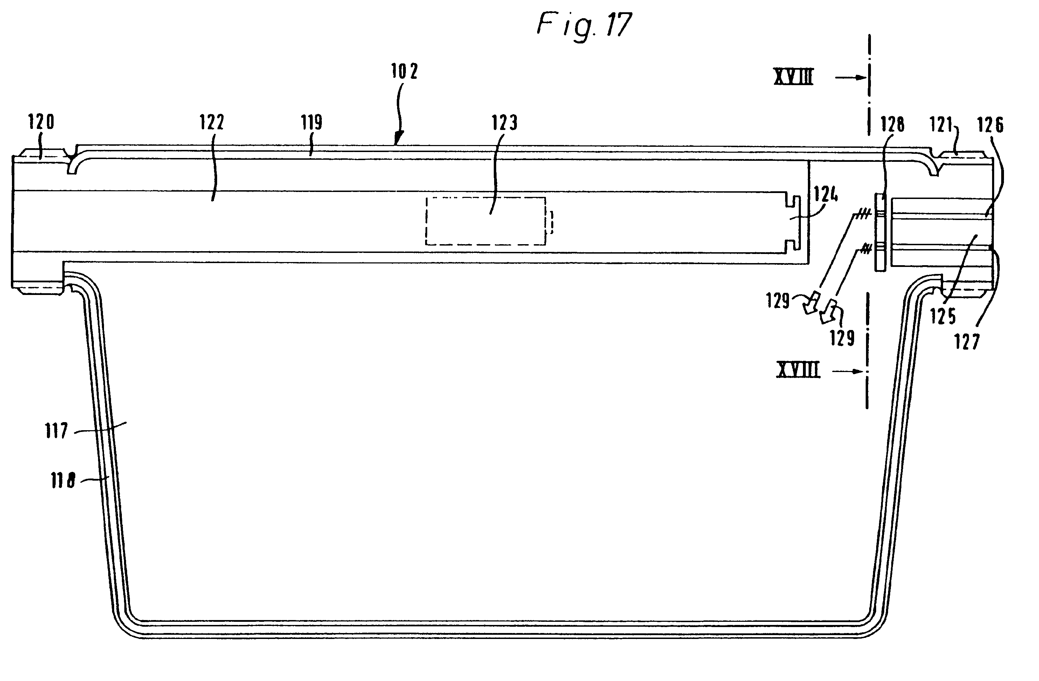

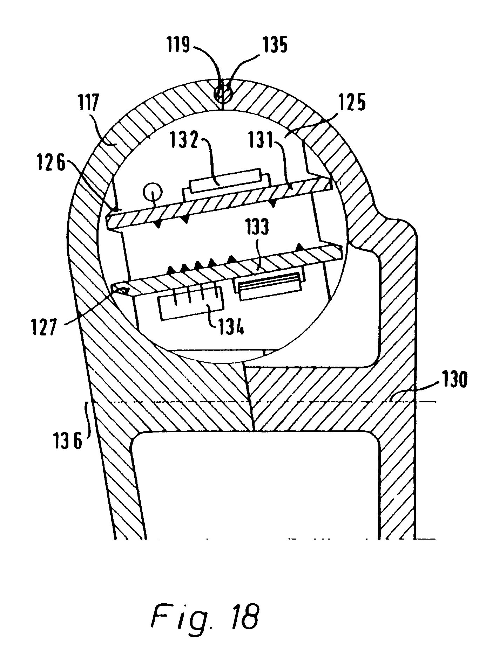

Zunächst setzt der Anwender der Meßkluppe einen für den speziell vorgesehenen Anwendungsfall vorbereiteten Anwenderprogrammspeicher 83 in den Kleinrechner 23 ein. Ein Beispiel für eine mechanische Ausführung dieser Elemente wird weiter unten anhand der Fig. 17 und 18 noch erläutert werden.

Durch Schließen der Meßschnäbel 13, 14 wird nun die Meßelektronik zunächst genullt. Hierzu ist der in Fig. 4 gezeigte Positionssensor 35 vorgesehen, der ähnlich wie die Längensensoren 34, 34a ausgebildet sein kann, sich jedoch oberhalb des Holms 50 des leiterförmigen Gebildes gemäß Fig. 7 befindet. In allen geöffneten Positionen der Meßkluppe 10 erzeugt der Positionssensor 15 somit ein kontinuierliches "Ein"-Signal.

Wie nun Fig. 4 deutlich zeigt, endet die Längsmarkierung 33 in einem Abstand z vor der Meßkante des ersten Meßschnabels 13. Andererseits ist der Positionssensor 35 am rechten Rand des Läufers 12 angeordnet. Dies bedeutet, daß bei erreichen der geschlossenen Stellung der Meßschnäbel 13, 14 und nur bei Erreichen dieser Stellung der Positionssensor 35 sich außerhalb des Einflußbereichs des Holms 50 befindet und somit ein "Aus"- Signal abgibt, das zum Nullen der Meßelektronik gemäß Fig. 13 verwendet werden kann.

Nachdem dieser Eichvorgang abgeschlossen ist, der selbstverständlich zwischen einzelnen Messungen beliebig häufis wiederholt werden kann, wird über die Längensensoren 34, 34a mit entsprechender Brückenbeschaltung ein Signal erzeugt, das den Abstand D der Meßschnäbel 13, 14, also beispielsweise dem Durchmesser D des Baumes 4 in Fig. 2 entspricht Die Erzeugung dieses Meßsignals ist an sich bekannt, beispielsweise aus der eingangs genannten US-PS 4 226 024 und braucht daher hier im einzelnen nicht nochmals erläutert zu werden.

Wenn die Meßkluppe 10 entsprechend der Darstellung der Fig. 12 mit einem Kraftsensor 36 zur Berücksichtigung der Verhältnisse bei weichen Meßobjekten versehen ist, so tritt die Schwellwertstufe 89 dann in Aktion, wenn ein vorgegebener Referenzkraftwert überschritten wurde. In diesem Falle spricht die Schwellwertstufe 89 an und erzeugt ein positives Signal, das über den invertierten Eingang des UND-Gatters 87 die Weitergabe von Längensignales des Brückenverstärkers 88 sperrt Die Messung wird also mit anderen Worten dann abgebrochen, wenn die Zudrückkraft der Meßschnäbel 13, 14 einen vorgegebenen Schwellwert überschreitet, der z.B. im Anwenderprogrammspeicher 83 oder mittels Betätigen von Tasten der Tastatur 85 vorgegeben werden kann.

Die so ermittelten Meßwerte werden über die Meßelektronik 86 dem Microcomputer 81 zugeführt, der diese Meßwerte entweder unmittelbar in dem externen Speicher 93 ablegt bzw. über die Schnittstelle 90 an einen externen Rechner weitergibt oder aber es werden zunächst noch in Abhängigkeit von mittels der Tastatur 85 eingegebenen Parametern Kennwerte aus den Meßwerten errechnet. Diese Kennwerte können diejenigen Werte sein, die anhand der Fig. 1 bis 3 im einzelnen erläutert wurden, also im Falle der Anwendung in Schlachthöfen, die Muskelfleischprozente, Handelsklassen und dgl., bei forstwirtschaftlicher Anwendung die Höhe, das Holzvolumen, der Festmeterpreis und schließlich bei Anwendungen in Käsereien der Reifegrad von Käselaiben. Diese Rennwerte können in der genannten Weise abgespeichert und/oder weitergegeben werden.

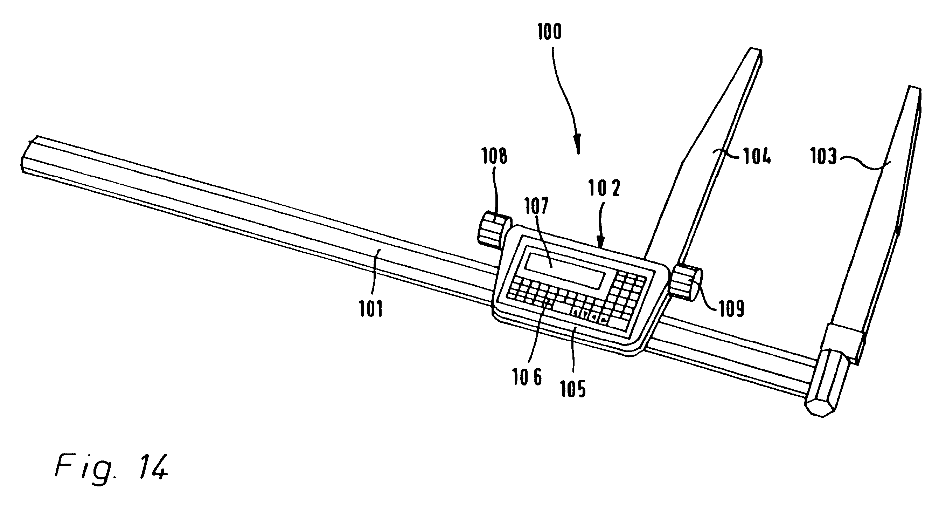

In den Fig. 14 bis 18 ist ein weiteres Ausführungsbeispiel einer erfindungsgemäßen Meßkluppe 100 dargestellt. Es sei betont, daß dieses weitere Ausführungsbeispiel nicht im Gegensatz zu dem zuvor geschilderten Ausführungsbeispiel der Meßkluppe 10 steht sondern daß sich vielmehr die Eigenschaften der beiden Meßkluppen 10, 100 gegenseitig ergänzen und unterstützen können, wenn sie gemeinsam an einer Meßkluppe verwirklicht werden. Insbesondere können die verwendeten Sensorsysteme, die Abmessungen und dgl. übereinstimmen. Lediglich dort, wo ausdrücklich auf Unterschiede hingewiesen wird, sind systematische Unterschiede zwischen den Meßkluppen 10 und 100 vorhanden.

In Fig. 14 ist 100 das weitere Ausführungsbeispiel einer erfindungsgemäßen Meßkluppe mit einem Stab 101 und einem darauf laufenden Läufer 102. Ein erster Meßschnabel 103 ist starr am rechten Ende des Stabes 101 angeordnet, während ein zweiter Meßschnabel 104 wiederum mit dem Läufer 102 verbunden ist.

Der Läufer 102 trägt einen pultförmigen Kleinrechner 105, der an seiner in Fig. 14 erkennbaren Oberseite mit einer Folientastatur 106 verbunden ist. Unter Folientastatur versteht man eine solche, bei der keine diskreten Tasten oder Knöpfe an der Oberfläche ausgebildet sind sondern vielmehr durch lokalisiertes Drücken auf die Oberfläche einer die gesamte Oberfläche bedeckenden Folie mittels darunterliegender Kontakte die erforderlichen Schaltvorgänge ausgelöst werden. Eine Folientastatur hat somit eine homogene, durchgehende Oberfläche und eignet sich für solche Anwendungsfälle, in denen eine Dichtigkeit gegenüber Umweltbedingungen, insbesondere Umgebungsfeuchte gewünscht wird.

Der Kleinrechner 105 weist eine LCD-Anzeige 107 zur alphanumerischen Darstellung von Werten auf.

Im Bereich der linken bzw. rechten oberen Ecke des pultförmigen Kleinrechners 105 sind Aufnahmekapseln 108, 109 für Batterien bzw. Platinen vorgesehen, wie dies weiter unten noch erläutert werden wird.

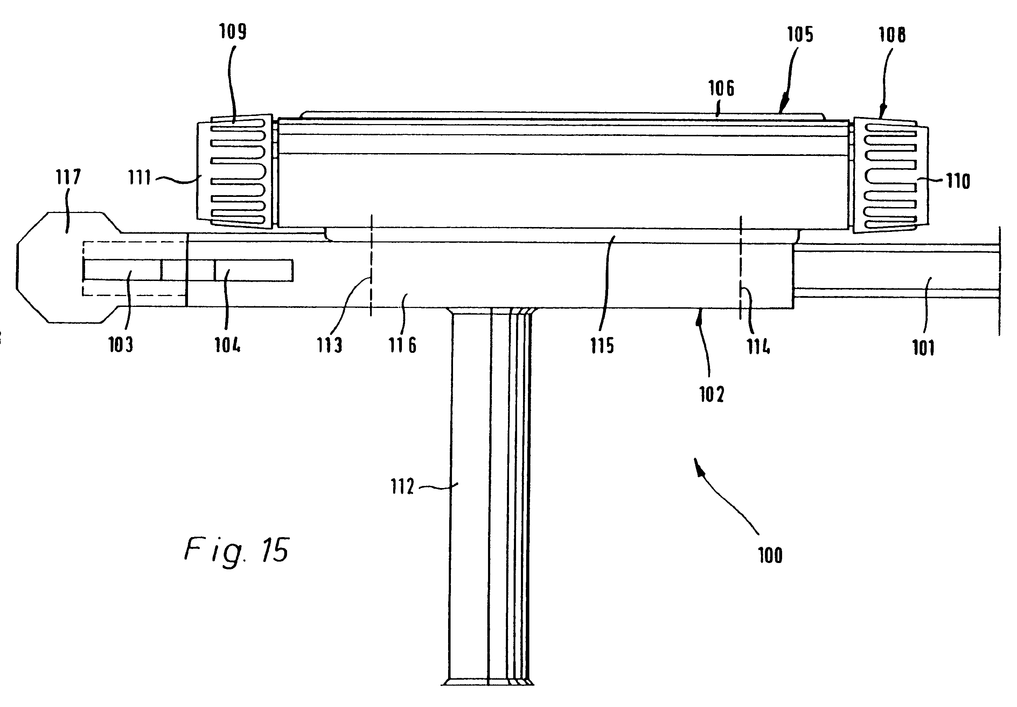

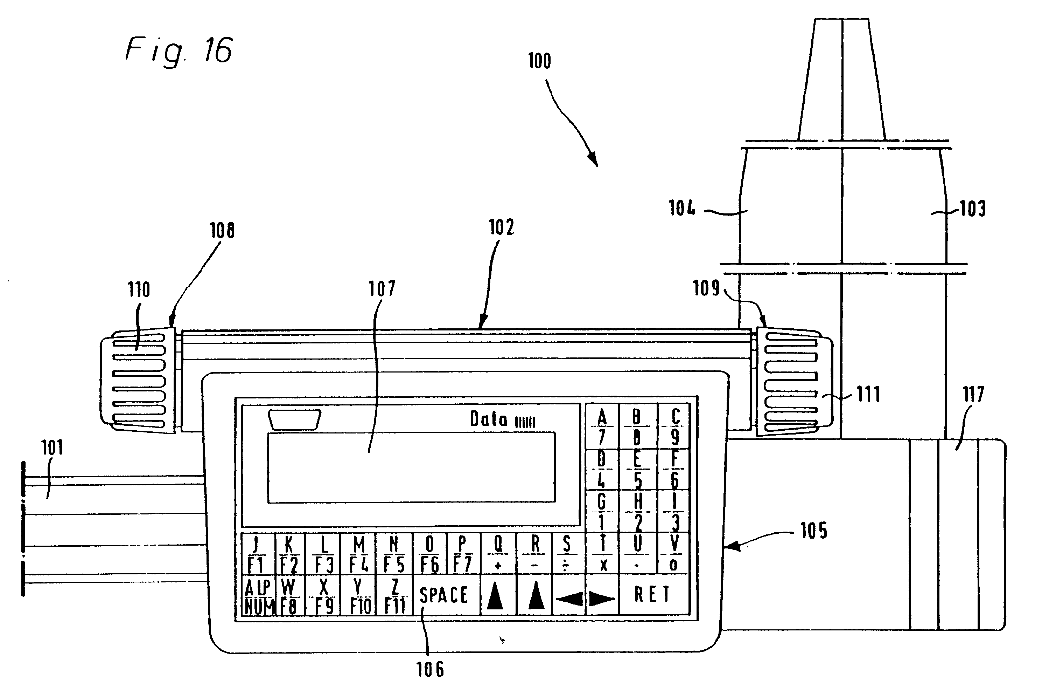

Die Fig. 15 und 16 zeigen in vergrößertem Maßstab weitere Einzelheiten der Meßkluppe 100.

Fig. 15, die eine Seitenansicht aus der Richtung der Meßschnäbel 103, 104 ist, zeigt zunächst, daß von der Unterseite des Läufeis 102 unter 90° ein Griff 112 absteht. Dieser Griff 112 wird vom Benutzer der Meßkluppe 100 mit der linken Hand ergriffei, während die rechte Hand beispielsweise an einem seitlichen Griff 117 am Fußpunkt des ersten Meßschnabels 103 angreifen kann. Auf diese Weise können die Meßschnäbel 103, 104 auseinander gezogen bzw. bei Anlage am Meßobjekt wieder zusammengeschoben werden. Dadurch, daß der Griff 112 sich an der Unterseite des Läufers 102 befindet, wird auch die Sicht auf die Oberseite des Kleinrechners 105 nicht behindert. Außerdem wird der Kleinrechner 105 auf diese Weise von unten unterstützt, so daß, bei einem rechtshändigen Benutzer, mit der rechten Hand von der Oberseite her auf die Folientastatur 106 gedrückt werden kann, ohne daß sich die Meßkluppe 100 dadurch verkantet.

Es ist ferner aus Fig. 15 und 16 deutlich zu erkennen, daß die Aufnahmekapseln 108, 109 Schraubkappen 110, 111 aufweisen, die von links bzw. rechts auf einen zylindrisch ausgebildeten Abschnitt an der oberen Längskante des Kleinrechners 105 aufgeschraubt werden, wie dies weiter unten anhand der Fig. 17 und 18 noch näher erläutert werden wird.

Mit 113 und 114 sind in Fig. 15 lösbare Befestigungsmittel angedeutet, insbesondere Schrauben oder eine Klipsverbindung, mit denen der Kleinrechner 105 über eine Halteplatte 115 auf den Läufer 102 aufgesetzt und dort befestigt werden kann.

Mit 116 ist dabei ein Führungsteil bezeichnet, daß eine entsprechende Aufnahme für den Stab 101 bildet, wie dies weiter vorne zum ersten Ausführungsbeispiel im einzelnen beschrieben wurde.

Aus Fig. 16 sind weitere Einzelheiten der Folientastatur 106 zuerkennen.

Man erkennt, daß die Folientastatur 106 eine Vielzahl von doppelbelegten Tastenfeldern aufweist, mit denen entweder Buchstaben oder Zahlen in den Kleinrechner 105 eingegeben werden können. Auch Funktionstasten F1, F2 ....F11 sind vorgesehen, ebenso wie Betätigungstasten für die Grundrechnungsarten, eine Abstandstaste sowie eine Cursor- Funktion, um damit die in Prozeßrechnern üblichen und an sich bekannten Eingabeund Datenmanipulationsmöglichkeiten zur Verfügung zu stellen.

Der Kleinrechner 105 ist in einem Gehäuse angeordnet, daß in einer Längsmittelebene in zwei Halbschalen unterteilt ist, von denen die untere Halbschale in Fig. 17 mit 117 bezeichnet ist. Die untere Halnschale 117 ist in ihrem in Fig. 17 unteren, flachprismatischen Abschnitt mit einer U-förmig umlaufenden Nut 118 versehen. Im oberen, halbzylindrisch ausgebildeten Abschnitt ist eine durchgehende weitere Nut 119 vorgesehen. Die Nuten 118, 119 sind im Querschnitt halbzylindrisch ausgeformt und dienen zur Aufnahme non elastischen Dichtungsprofilen, die bei zusammengefügten Halbschalen eine allseits umlaufende Dichtung gegenüber Feuchtigkeit gewährleisten.

An der linken bzw. rechten oberen Ecke der Halnschale 117 und zwar zwischen den freien Enden der Nuten 118, 119 sind nach außen sich öffnende Gewindestutzen 120, 121 angeformt. Der linke Gewindestutzen 120 eröffnet den Zugang zu einem ersten, langgestreckten Aufnahmeraum 122, in den durch den ersten Gewindestutzen 120 hindurch Batterien 123 in Reihenschaltung eingeschoben werden können. Am rechten Ende des ersten Aufnahmeraumes 122 befindet sich ein Feder-/Kontaktraum 124, um die Batterien 123 unter Druck mit ihren Polen aneinander zu halten und für entsprechende Spannungsabnahme zu sorgen.

Der zweite Gewindestutzen 121 umschließt einen zweiten, axial wesentlich kürzeren Aufnahmeraum 125. Im zweiten Aufnahmeraum 125 sind übereinander zwei Nuten 126, 127 angeordnet. An dem vom zweiten Gewindestutzen 121 abgewandten Ende der Nuten 126, 127 schließen sich Steckerleisten 128 an. Von den Steckerleisten 128 führen mehradrige Datenleitungen in den Innenraum des Gehäuses, um mit 129 angedeutete Daten zu den Schalteinheiten des Kleinrechners 102 zu transportieren, wie sie im einzelnen anhand Fig. 13 erläutert wurden.

Die vergrößerte Querschnittsdarstellung der Fig. 18 zeigt, daß in einer oberen Halbschalz 130 des Gehauses des Kleinrechners 102 zu den Nuten 126, 127 komplementäre Nuten angeordnet sind. Auf diese Weise lassen sich axial in den zweiten Aufnahmeraum 125 eine erste Platine 131 mit elektronischen Bauelementen 132 sowie darunter eine zweite Platine 133 mit elektronischen Bauelementen 134 einschieben.

Fig. 18 zeigt auch bei 135 die in der Nut 119 angeordnete Dichtung und mit 136 ist angedeutet, daß die Halbschalen 117, 130 miteinander verschraubt oder verklipst werden können.

Die Platinen 131, 133 mit ihren Bauelementen 132, 134 symbolisieren die mit 83 und 93 in Fig. 13 dargestellten Einheiten, nämlich einen Arbeitsprogrammspeicher und einen Meßwertspeicher, die je nach Einsatzfall der Meßkluppe 100 aus dem zweiten Aufnahmeraum 125 entnommen werden können.

Hierzu braucht lediglich die zweite Schraubkappe 111 vom zweiten Gewindestutzen 121 abgeschraubt zu werden und es kann dann jede der Platinen 131 oder 133 axial herausgezogen und gegen eine ander Platine ersetzt werden, entweder um durch Austausch des Arbeitsprogrammes die Meßkluppe 100 für einen anderen Anwendungsfall vorzubereiten oder um durch Austausch des Meßwertpeichers die erfaßten Meßwerte zu entnehmen und z. B. in eine ander Datenverarbeitungsanlage zu übertragen.

Durch Wieder-Aufschrauben der zweiten Schraubkappe 111 wird mit Hilfe einer in der Schraubkappe 111 vorgesehenen, an sich bekannten Dichtung eine vollständige Abdichtung des zweiten Aufnahmeraumes 125 gegenüber der Außenatmosphäre gewährleistet.

Außerdem wird dadurch, daß die zweite Schraubkappe 111 den Gewindestutzen 121 sowohl an der unteren Halbschale 117 wie auch an der oberen Halbschale 130 umfaßt, eine weitere mechanische Sicherung der beiden Halbschalen 117, 130 gegeneinander erreicht.

Es versteht sich, daß die Erfindung nicht durch die im einzelnen geschilderten Ausführungsbeispiele oder die im einzelnen geschilderten Anwendungsfälle eingeschränkt ist. So sind zahlreiche Varianten im Rahmen der vorliegenden Erfindung denkbar, die zwar über die speziellen Merkmale der Ausführungsbeispiele oder der beispielhaften Anwendungen hinausgehen, gleichfalls aber die vorliegende Erfindung nicht verlassen.

So kann zum einen die Formgestaltung der Meßkluppe variiert werden, ebenso wie die Auswahl der Materialien oder die jeweilige Anordnung der Meß- und Meßwertverarbeitungselemente auf dem Läufer oder dem Stab, ohne daß dies der vorliegenden Erfindung Abbruch tut.

Weiterhin können im. Rahmen der vorliegenden Erfindung für die Meßkluppe auch andere Sensorarten zur Erfassung der Länge oder der Position verwendet werden, beispielsweise kapazitive, optische oder sonstige Sensoren, ohne den Rahmen der vorliegenden Erfindung zu verlassen.

Schließlich ist die Erfindung nicht auf die drei genannten Anwendungsfälle beschränkt, sondern sie ist überall dort einsetzbar, wo die Ausmessung von Gegenständen mit einer unmittelbaren Meßwertverarbeitung gewünscht wird und auf eine Unempfindlichkeit gegenüber Umwelteinflüssen und eine Flexibilität der Anordnung Wert gelegt wird.

## Patentansprüche

1. Meßkluppe mit einem Stab (11; 101) und einem auf dem Stab (11; 101) mittels formschlüssiger Führung (30) längsverschiebbaren Läufer (12;102), wobei der Stab (11; 101) und der Läufer (12;102) mit je einem rechtwinklig abstehenden Meßschnabel (13, 14; 103, 104) in zueinander paralleler Anordnung versehen sind, wobei zwischen dem Stab (11, 101) und dem Läufer (12; 102) mindestens eine Längsmarkierung (33) in Wechselwirkung mit mindestens einem Längensensor (34) steht und der mindestens eine Längensensor (34) an am Läufer (12; 102) angeordnete elektronische Schaltmittel zur Auswertung von Signalen des Sensors (34) angeschlossen ist, und die Schaltmittel als Kleinrechner (23; 105) mit Tastatur (27; 106) und Anzeigeelementen (25; 107) ausgebildet sind, dadurch gekennzeichnet, daß zwischen Läufer (12) und Stab (11) ein Positionssensor (35) mit einer Positionsmarke zusammenwirkt, derart, daß der Positionssensor (35) bei aneinander anliegenden Meßschnäbeln (13, 14) ein Nullungssignal für den Kleinrechner (23) erzeugt, wobei die Positionsmarke dadurch gebildet wird, daß die Längenmarkierung (33) ferner mit dem Positionssensor (35) zusammenwirkt und in ihrer Längsausdehnung derart begrenzt ist, daß bei Anlegen der Meßschnäbel (13, 14) aneinander der Positionssensor (35) außer Wechselwirkung mit der Längenmarkierung (33) tritt.

2. Meßkluppe nach Anspruch 1, dadurch gekennzeichnet, daß die Schaltmittel mittels lösbarer Verbindungsmittel (45, 46, 47, 48; 128) am Läufer (12; 102) befestigt sind.

3. Meßkluppe nach Anspruch 2, dadurch gekennzeichnet, daß der Kleinrechner (23; 105) eine Halteplatte (22; 115) aufweist, von der ein Abschnitt als ein Teil der formschlüssigen Führung (30) ausgebildet ist, wobei die Halteplatte (22; 115) mit einem Führungsteil (20; 116) des Läufers (23; 102) verbindbar ist, von dem ein weiterer Abschnitt einen weiteren Teil der formschlüssigen Führung (30) bildet.

4. Meßkluppe nach einem der Ansprüche 2 oder 3, dadurch gekennzeichnet, daß ein Längensensor (34) am Kleinrechner (23) angeordnet ist.

5. Meßkluppe nach einem der Ansprüche 1 bis 4, dadurch gekennzeichnet, daß ein Sensor (34a) am Läufer (12) angeordnet ist und daß die lösbaren Verbindungsmittel (45, 46, 47, 48) elektrische Verbindungsmittel (48) aufweisen.

6. Meßkluppe nach einem der Ansprüche 1 bis 5, dadurch gekennzeichnet, daß der Stab (11; 101) im Querschnitt eine doppelprismatische Gestalt mit einem hohen, rechteckförmigen Mittelabschnit und flachen, trapezförmigen Ober- bzw. Unterabschnitten aufweist.

7. Meßkluppe nach Anspruch 6, dadurch gekennzeichnet, daß die Längsmarkierungen (33, 33a) verdeckt im Stab (11) angeordnet sind.

8. Meßkluppe nach einem der Ansprüche 6 oder 7, dadurch gekennzeichnet, daß der Läufer (12) mit Laufflächeneinsätzen (41, 42) versehen ist und daß der Stab (11) mit Schrägflächen seiner trapezförmigen Ober- bzw. Unterabschnitte nur an den Laufflächeneinsätzen (41, 42) anliegt.

9. Meßkluppe nach einem der Ansprüche 1 bis 8, dadurch gekennzeichnet, daß der Läufer (12) mit einer Durchgangsöffnung für den Stab (11) versehen ist und daß die Durchgangsöffnung nur im Bereich des Eintrittes bzw. des Austrittes des Stabes (11) abschnittsweise mit der formschlüssigen Führung (30, 30a, 30b) versehen ist.

10. Meßkluppe nach einem der Ansprüche 1 bis 15, dadurch gekennzeichnet, daß der Läufer (12) und der Stab (11) im wesentlichen aus einem Kohlefaser-Epoxid-Verbund (CFK) bestehen, wobei vorzugsweise ein Führungsteil (20) und eine Halteplatte (22) des Läufers (12) sowie die Meßschnäbel (13, 14) aus einem massiven KohlefaserEpoxid-Verbund bestehen, der Stab (11) hingegen als Hohlprofil aus einem Kohlefaser-Epoxid-Verbund ausgebildet ist.

11. Meßkluppe nach einem der Ansprüche 1 bis 10, dadurch gekennzeichnet, daß die Längsmarkierung (33) als leiterförmiges Gebilde (50, 51, 52) aus ferromagnetischem Material mit um jeweils eine Teilung (T) in Längsrichtung versetzten Sprossen (51, 51a ...) ausgebildet ist und daß im Abstand von dem Gebilde (50, 51, 52) der Längensensor (34) mit einem Dauermagnet (61) sowie einem magnetfeldempfindlichen Element (60) über die Sprossen (51, 51a ...) des Gebildes (50, 51, 52) hinweg parallel zu dem Gebilde (50, 51, 52) verschiebbar ist.

12. Meßkluppe nach einem der Ansprüche 1 bis 11, dadurch gekennzeichnet, daß die Längsmarkierungen (33) als Reihe von um jeweils eine Teilung in Längsrichtung versetzten Dauermagneten (65, 66) ausgebildet sind und daß im Abstand von den Dauermagneten (65, 66) der Längensensor (34) mit einem magnetfeldempfindlichen Element (60) parallel zu der Reihe verschiebbar ist.

13. Meßkluppe nach Anspruch 11 oder 12, dadurch gekennzeichnet, daß das magnetfeldempfindliche Element (60) als Differentialelement (60', 60"), vorzugsweise als Differential-Feldplatte oder Differential-Hall-Element in Brückenschaltung ausgebildet ist.

14. Meßkluppe nach Anspruch 11, dadurch gekennzeichnet, daß das leiterförmige Gebilde (50, 51, 52) auf dem Stab (11) angeordnet ist und in einem Abstand (z) von dem Meßschnabel (13) des Stabes (11) endet, daß der Positionssensor (35) auf dem Läufer (12) in einer mit einer Meßkante des Meßschnabels (14) des Läufers (12) im wesentlichen fluchtenden Lage angeordnet ist und daß der Positionssensor (35) mit einem durchgehenden Holm (50) des Gebildes (50, 51, 52) zusammenwirkt.

15. Meßkluppe nach einem der Ansprüche 1 bis 14, dadurch gekennzeichnet, daß die Schaltmittel mit einem demontierbaren Speicher (83, 93; 131/132, 131/134) versehen sind.

16. Meßkluppe nach Anspruch 15, dadurch gekennzeichnet, daß der Speicher (93) ein mittels UV-Licht löschbarer Baustein ist.

17. Meßkluppe nach Anspruch 15 oder 16, dadurch gekennzeichnet, daß der Speicher als elektronisches Bauelement (132; 134) auf einer Platte (131, 133) angeordnet ist und daß die Platine (131, 133) in eine Nut (126, 127) eines Aufnahmeraumes (125) eines am Läufer (102) angeordneten Kleinrechners (105) einschiebbar ist.

18. Meßkluppe nach Anspruch 17, dadurch gekennzeichnet, daß der Aufnahmeraum (125) im wesentlichen zylindrisch ausgebildet und mittels einer Schraubkappe (111) dicht verschließbar ist.

19. Meßkluppe nach Anspruch 18, dadurch gekennzeichnet, daß entlang einer Längskante des im wesentlichen quaderförmigen Kleinrechners (105) nebeneinander zwei Aufnahmeräume (122, 125) für Batterien (123) bzw. die Platine (131, 133) angeordnet und mittels Schraubkappen (110, 111) dicht verschließbar sind.

20. Meßkluppe nach Anspruch 19, dadurch gekennzeichnet, daß der Kleinrechner (105) ein aus zwei Halbschalen (117, 130) bestehendes Gehäuse aufweist, daß in der Anlageebene der Halbschalen (117, 130) umlaufende Nuten (118, 119) zur Aufnahme von Dichtungen (135) vorgesehen sind und daß die Anlageebene die Aufnahmeräume (122, 125) axial schneidet.

21. Meßkluppe nach Anspruch 20, dadurch gekennzeichnet, daß an die untere Halbschale (117) ein vorzugsweise unter 90° abstehender Griff (112) angesetzt ist.

22. Verwendung einer Meßkluppe (1; 10; 100) nach einem der Ansprüche 1 bis 21 zum Vermessen von Schlachtvieh, insbesondere von Schlachtvieh-Hälften (2), wobei die Schaltmittel aus Meßwerten (3) Klassifizierungsparameter des Schlachtviehs wie Muskelfleischprozente, Handelsklassen usw. bestimmen.

23. Verwendung einer Meßkluppe (1; 10; 100) nach einem der Ansprüche 1 bis 21 zum Vermessen von Baumstämmen, wobei die Schaltmittel aus Meßwerten (D) weitere Abmessungen (h) der Baumstämme, Holzmengen, Preise usw. bestimmen.

24. Verwendung einer Meßkluppe (1; 10; 100) nach einem der Ansprüche 1 bis 21 zum Vermessen von Käselaiben, wobei die Schaltmittel aus Meßwerten (d, h) den Reifegrad, Mengen, Preise usw. bestimmen.

## Claims

1. A slide caliper comprising a rule (11; 101) and a slide (12; 102) being longitudinally displaceable on said rule (11; 101) by means of a form-locking guide (30), the rule (11; 101) and the slide (12; 102) being each provided with a measuring leg (13, 14; 103, 104) extending at a right angle therefrom in parallel relationship to each other, a longitudinal marking (33) and at least one longitudinal sensor (34) cooperating with each other between the rule (11; 101) and the slide (12; 102), the at least one longitudinal sensor (34) being connected to electronic circuit means arranged at the slide (12; 102) for evaluating signals from the sensor (34), the circuit means being designed as a mini-computer (23; 105) having a keyboard (27; 106) and display elements (25; 107), characterized in that a position sensor (35) cooperates between the slide (12) and the rule (11) with a position mark such that the position sensor (34) generates a reset signal for the minicomputer (23) when the measuring legs (13, 14) adjoin each other, the position mark being constituted in that the longitudinal marking (33), further, cooperates with the position sensor (35) and is restricted in its longitudinal extension such that the position sensor (35) gets out of cooperation with the longitudinal marking (33) when the measuring legs (13, 14) adjoin each other.

2. The slide caliper of claim 1, characterized in that the circuit means are connected to the rule (12; 102) by means of detachable connecting means (45, 46, 47, 48; 128).

3. The slide caliper of claim 2, characterized in that the mini-computer (23; 105) is provided with a support plate (22; 115), a section thereof being designed as one part of the form-locking guide (30), the support plate (22; 115) being designed to be connected with a guide part (20; 116) of the slide (23; 102), a further section of the guide part (20; 116) constituting another part of the form-locking guide (30).

4. The slide caliper of any of claims 2 or 3, characterized in that the longitudinal sensor (34) is arranged at the mini-computer (23).

5. The slide caliper of any of claims 1 through 4, characterized in that a sensor (34a) is arranged at the slide (12) and that the detachable connector means (45, 46, 47, 48) comprise electrical connector means (48).

6. The slide caliper of any of claims 1 through 5, characterized in that the rule (11; 101) has a double-prism cross-sectional design comprising one high, rectangular central section and flat, trapezoidal upper and lower sections, respectively.

7. The slide caliper of claim 6, characterized in that the longitudinal markings (33, 33a) are embedded within the rule (11).

8. The slide caliper of any of claims 6 or 7, characterized in that the slide (12) is provided with slide surface inserts, and that the rule engages the slide surface inserts (41, 42) exclusively with inclined surfaces of its trapezoidal upper end lower sections, respectively.

9. The slide caliper of any of claims 1 through 8, characterized in that the slide (12) is provided with a through-opening for the rule (11), and that the through-opening, in sections thereof, is provided with the form-locking guide (30, 30a, 30b) exclusively in the area of the entry and the exit, respectively, of the rule (11).

10. The slide caliper of any of claims 1 through 15, characterized in that the slide (12) and the rule (11) consist essentially of a carbon-epoxide, compound (CFK), a guide part (20) and a support plate (22) of the slide (12) as well as the measuring legs (13, 14) consisting of an integral carbon-epoxide-compound, whereas the rule (11) is designed as a hollow profile of a carbon-epoxide-compound.

11. The slide caliper of any of claims 1 through 10, characterized in that the longitudinal marking (33) is designed as a ladder-shaped element (50, 51, 52) from ferromagnetic material having rungs (51, 51a) being offset from each other in longitudinal direction by one each (T), and that the longitudinal sensor having a permanent magnet (61) as well as a magnetically sensitive element (60) is displaceable at a distance from the element (50, 51, 52) over the rungs (51, 51a) of the element (50, 51, 52) in a direction parallel to the element (50, 51, 52).

12. The slide caliper of any of claims 1 through 11, characterized in that the longitudinal markings (33) are designed as a row of permanent magnets (65, 66) being offset from each other by one pitch in the longitudinal direction, and that the longitudinal sensor (34) having a magnetically sensitive element (60) is displaceable at a distance from the permanent magnets (65, 66) in a direction parallel to the row.

13. The slide caliper of claim 11 or 12, characterized in that the magnetically sensitive element (60) is designed as a differential element (60′, 60″), preferably as a differential field plate or a differential Hall element switched in a bridge circuit.

14. The slide caliper of claim 11, characterized in that the ladder-shaped element (50, 51, 52) is arranged on the rule (11) and terminates at a distance (z) from the measuring leg (13) of the rule (11), that the position sensor (35) is arranged on the slide (12) in a position essentially flush with a measuring edge of the measuring leg (14) of the slide (12), and that the position sensor (35) cooperates with a continuous stringer (50) of the element (50, 51, 52).

15. The slide caliper of any of claims 1 through 14, characterized in that the circuit means are provided with a detachable memory (83, 93; 131/132, 131/134).

16. The slide caliper of claim 15, characterized in that the memory (93) is an element being erasable by means of ultra-violet light.

17. The slide caliper of claims 15 or 16, characterized in that the memory is designed as an electronic element (132; 134) being arranged on a plate (131, 133), and that the plate (131, 133) is designed to be inserted into a groove (126, 127) of a receptacle (125) of a mini-computer (105) being arranged at the slide (102).

18. The slide caliper of claim 17, characterized in that the receptable (125) is of essentially cylindrical design and may be tightly closed by means of a screw cap (111).

19. The slide caliper of claim 18, characterized in that two receptacles (122, 125) for batteries (123) and the plate (131, 133), respectively, are arranged along a longitudinal edge of the mini-computer (105) being of essentially parallel epipede design and that the receptacles may be closed tightly by means of screw caps (110, 111).

20. The slide caliper of claim 19, characterized in that the mini-computer (105) comprises a housing consisting of two half shells (117, 130), that peripheral grooves (118, 119) for receiving seals (135) are provided within the contact plane of the half shells (117, 130), and that the contact planes axially intersects the receptacles (122, 125).

21. The slide caliper of claim 20, characterized in that a handle (112) is attached to the lower half shell (117), preferably extending under 90°.

22. Use of a slide caliper (1; 10; 100) of any of claims 1 through 21 for measuring animals for slaughter, in particular animal carcass halves (2), in which case the measured values (3) are evaluated by the circuit means for deriving classification parameters for the animals such as muscle substance percentages, commercial grades, etc.

23. Use of a slide caliper (1; 10; 100) of any of claims 1 through 21 for measuring trunks, wherein the circuit means derive further dimensions (h) of the trunks, wood volumes, prices, etc. from the measured values (D).

24. Use of a slide caliper (1; 10; 100) of any of claims 1 through 21 for measuring whole cheese, wherein the circuit means derive the state of maturity, volumes, prices, etc. from the measured values (d, h).

## Revendications

1. Pied à coulisse, avec une règle (11;101) sur laquelle coulisse longitudinalement, au moyen d'un guidage par liaison de forme (30), un curseur (102), la règle (11;101) et le curseur (12;102) étant pourvus respectivement d'un bec de mesure (13,14;103,104) faisant saillie à angle droit, les deux becs étant mutuellement parallèles, au moins une graduation longitudinale (33) située entre la règle (11,101) et le curseur (12;102) coopère avec au moins un capteur de longueur (34) et le ou chaque capteur de longueur (34) étant relié à des moyens de commutation électronique, disposés sur le curseur (12;102) afin d'évaluer les signaux du capteur (34), les moyens de commutation étant réalisés sous forme de mini-calculateur (23;105), avec un clavier (27;106) et des éléments d'affichage (25;107), caractérisé en ce qu'entre le curseur (12) et la règle (11), un capteur de position (35) coopère avec une marque de position, de telle façon que, lorsque les becs de mesure (13,14) appuient l'un sur l'autre, le capteur de position produise un signal de remise à zéro pour le mini-calculateur (23), la marque de position étant formée par le fait que la graduation longitudinale (33) coopère en outre avec le capteur de position (35) et son étendue linéaire étant limitée par le fait que, lors de l'accostage mutuel des becs de mesure (13,14), le capteur de position (35) sort de sa coopération la graduation longitudinale (33).

2. Pied à coulisse selon la revendication 1, caractérisé en ce que les moyens de commutation sont fixés sur le curseur (12;102) grâce à des moyens de liaison (45,46,47,48;128) amovibles.

3. Pied à coulisse selon la revendication 2, caractérisé en ce que le mini-calculateur (23;105) présente une plaque de maintien (22;115), dont une section est réalisée sous forme de partie du guidage par liaison de forme (30), la plaque de maintien (22;115) étant susceptible d'être reliée à une partie de guidage (20;116) du curseur (23;102), dont une autre section forme une autre partie du guidage à liaison de forme (30).

4. Pied à coulisse selon l'une des revendications 2 ou 3, caractérisé en ce qu'un capteur de longueur (34) est disposé dans le mini-calculateur (23).

5. Pied à coulisse selon l'une des revendications 1 à 4, caractérisé en ce qu'un capteur (34a) est disposé sur le curseur (12), et que les moyen de liaison (45,46,47,48) amovibles présentent un moyen de liaison électrique (48).

6. Pied à coulisse selon l'une des revendications 1 à 5, caractérisé en ce que la règle (11;101) présente une section transversale en forme de double prisme, avec une section médiane haute, rectangulaire, et des sections supérieure, respectivement inférieure, plates, trapézoïdales.

7. Pied à coulisse selon la revendication 6, caractérisé en ce que les graduations longitudinales (33) sont disposées cachées dans la règle (11).

8. Pied à coulisse selon l'une des revendications 6 ou 7, caractérisé en ce que le curseur (12) est pourvu de garnitures de surface de déplacement (41,42) et la règle (11) s'appuie, avec des surfaces inclinées de ses sections supérieure, respectivement inférieure, trapézoïdales, seulement sur les garnitures de surface de déplacement (41,42).

9. Pied à coulisse selon l'une des revendications 1 à 8, caractérisé en ce que le curseur (12) est pourvu d'une ouverture de passage pour la règle (11), l'ouverture de passage étant pourvue, par sections, du guidage par liaison de forme (30,30a,30b), seulement dans la zone de l'entrée, respectivement de la sortie de la règle (11).

10. Pied à coulisse selon l'une des revendications 1 à 15, caractérisé en ce que le curseur (12) et la règle (11) se composent essentiellement d'un composite fibre de carbone-époxy (CFK), où de préférence une partie de guidage (20) et une plaque de maintien (22) du curseur (12) ainsi que les becs de mesure (13,14) se composent d'un composite fibre de carbone-époxy massif, la règle (11) étant par contre réalisée sous forme de profilé creux en composite fibre de carbone-époxy.

11. Pied à coulisse selon l'une des revendications 1 à 10, caractérisé en ce que les graduations longitudinales (33) sont réalisées sous forme de structure (50,51,52) en forme d'échelle, en matériau ferromagnétique, avec des échelons (51,51a...) décalés chacun de la valeur d'une division (T) en direction longitudinale, le capteur de longueur (34), avec un aimant (61) ainsi qu'un élément (60) sensible au champ magnétique, étant déplaçable, à distance de la structure (50,51,52), au-dessus des échelons (51,51a...) de la structure (50,51,52), parallèlement à cette dernière.

12. Pied à coulisse selon l'une des revendications 1 à 11, caractérisé en ce que les graduations longitudinales (33) sont réalisées sous forme d'une série d'aimants permanents (65,66), décalés chaque fois d'une division dans la direction longitudinale, le capteur de longueur (34), avec un élément (60) sensible au champ magnétique, étant déplaçable, à distance des aimants permanents (65,66), parallèlement à la série qu'ils constituent.

13. Pied à coulisse selon la revendication 11 ou 12, caractérisé en ce que l'élément (60) sensible au champ magnétique est réalisé sous forme d'élément différentiel (60',60"), de préférence sous forme de plaque de champ différentiel ou d'élément différentiel à effet Hall, monté dans un circuit en pont.

14. Pied à coulisse selon la revendication 11, caractérisé en ce que la structure (50,51,52) en forme d'échelle est disposée sur la règle (11) et s'achève à une distance (z) du bec de mesure (13) de la règle (11), le capteur de position (35) étant disposé sur le curseur (12), en une position sensiblement alignée par rapport à une arête de mesure du bec de mesure (14) du curseur (12), et le capteur de position (35) coopérant avec un longeron continu (50) de la structure (50,51,52).

15. Pied à coulisse selon l'une des revendications 1 à 14, caractérisé en ce que les moyens de commutation sont pourvus d'une mémoire (83,93;131/132,131/134) démontable.

16. Pied à coulisse selon la revendication 15, caractérisé en ce que la mémoire (93) est un composant effaçable au moyen de lumière UV.

17. Pied à coulisse selon la revendication 15 ou 16, caractérisé en ce que la mémoire est réalisée sous forme de composant électronique (132;134) disposé sur une plaque (131;133) et que la platine (131,133) est insérable dans une rainure (126,12) d'un espace de réception (125) d'un mini-calculateur (105), disposé sur le curseur (102).

18. Pied à coulisse selon la revendication 17, caractérisé en ce que l'espace de réception (125) est sensiblement cylindrique et obturable hermétiquement au moyen d'un capuchon vissé (111).

19. Pied à coulisse selon la revendication 18, caractérisé en ce que deux espaces de réception (122,125) pour des batteries (123), respectivement la platine (131,133), sont disposés l'un à côté de l'autre, le long d'une arête longitudinale du mini-calculateur (105), sensiblement en forme de parallélèpipède rectangle, et obturables hermétiquement au moyen de capuchons vissés (110,111).

20. Pied à coulisse selon la revendication 19, caractérisé en ce que le mini-calculateur (105) présente un boîtier composé de deux demi-coques (117,130), des rainures (118,119) de pourtour étant prévues dans le plan d'appui des demi-coques (117,130), pour recevoir des joints d'étanchéité (135), et le plan d'appui coupant axialement les espaces de réception (122,125).

21. Pied à coulisse selon la revendication 20, caractérisé en ce qu'une poignée (112) est placée sur la demi-coque inférieure (117), de préférence faisant saillie à angle droit.

22. Utilisation d'un pied à coulisse (1;10;100) selon l'une des revendications 1 à 21, pour mesurer des animaux de boucherie, en particulier des moitiés d'animaux (2), les moyens de commutation déterminant à partir de valeurs de mesure (3) des paramètres de classification de l'animal de boucherie, tels que le pourcentage de masse musculaire, la classe commerciale, etc.

23. Utilisation d'un pied à coulisse (1;10;100) selon l'une des revendications 1 à 21, pour mesurer des troncs d'arbres, les moyens de commutation déterminant à partir de valeurs de mesure (D) d'autres dimensions (h) des troncs d'arbre, les quantités de bois, les prix, etc.

24. Utilisation d'un pied à coulisse (1;10;100) selon l'une des revendications 1 à 21, pour mesurer des mottes de fromage, les moyens de commutation déterminant à partir de valeurs de mesure (d,h) le degré de maturité, les quantités, les prix, etc.

Fig. 1

Fig. 2

Fig. 3

EP 0 294 467 B1

Fig. 5

Fig. 4

Fig. 7

Fig. 6

Fig. 8

Fig. 9

Fig.10

Fig. 11

## Fig. 12

## Fig. 13

Fig. 14

EP 0 294 467 B1

Fig. 15

EP 0 294 467 B1

Fig. 16

Fig. 17

EP 0 294 467 B1

Fig. 18

EP 0 294 467 B1